# EUROPEAN PATENT APPLICATION

(11) **EP 4 556 996 A1**
(43) Date of publication of application: **21.05.2025**
(21) Application number: 23839807.7
(22) Date of filing: 07.06.2023
(51) Int. Cl.: G03B 13/36, G03B 3/10, G03B 17/12, G02B 7/09, H02K 41/035, H04N 23/68, H04N 23/54, H04N 23/55, H04N 23/57, G03B 5/02

(54) **LENS-DRIVING DEVICE, CAMERA DEVICE, AND OPTICAL DEVICE**

(30) Priority: 15.07.2022 KR 20220087632; 17.10.2022 KR 20220133287
(71) Applicant: LG INNOTEK CO. LTD, Gangseo-gu Seoul 07796 (KR)
(72) Inventor: LEE, Sung Guk, Seoul 07796 (KR)
(74) Representative: DREISS Patentanwälte PartG mbB
(86) International application number: PCT/KR2023/007778
(87) International publication number: WO 2024/014713

(57) **Abstract**

The present embodiment relates to a lens-driving device comprising: a housing; a substrate disposed in the housing; a holder disposed within the housing; a magnet disposed on the holder; a coil interacting with the magnet; and an elastic member connecting the housing and the holder, wherein the coil comprises a first coil disposed on the substrate and a second coil disposed on the opposite side of an optical axis to the first coil, and the elastic member electrically connects the second coil and the substrate.

## Description

### [Technical Field]

The present embodiment relates to a lens driving device, a camera device, and an optical device.

### [Background Art]

A camera device is a device that takes pictures or videos of a subject, and is installed in optical devices such as smartphones, drones, and vehicles.

Recently, research is being conducted on a triple camera structure in which three camera devices are disposed in a parallel manner on a smartphone.

At this time, magnetic interference between camera devices placed in parallel is a problem, and in particular, in the case of a camera device placed in the center, a design is required that avoids magnetic interference with the camera devices on either side.

In addition, in the case of camera modules mounted on small electronic devices such as smartphones, the camera module may frequently receive shocks during use, and may shake slightly due to the user's hand shaking while capturing. Considering this, technology to additionally install anti-shake means on the camera module has been recently developed.

(Patent Document 1) KR 10-2015-0118005 A

### [Disclosure]

### [Technical Problem]

An object of a first embodiment of the present disclosure is to provide a lens driving device in which magnetic interference from surrounding camera devices is minimized in a structure in which a plurality of camera devices are disposed in a parallel manner.

In particular, an object thereof is to provide a lens driving device that is positioned in the center of a triple camera structure and minimizes magnetic interference from camera devices on either side. Furthermore, an object thereof is to provide a lens driving device that minimizes magnetic interference with adjacent camera devices even when positioned as a dual camera.

An object of a second embodiment of the present disclosure is to provide a lens driving device capable of improving the accuracy and reliability of AF driving, and a camera module and optical device comprising the same.

### [Technical Solution]

A lens driving device according to a first embodiment of the present disclosure comprises: a housing; a substrate disposed in the housing; a holder disposed within the housing; a magnet disposed in the holder; a coil interacting with the magnet; and an elastic member connecting the housing and the holder, in which the coil comprises a first coil disposed on the substrate and a second coil disposed on the opposite side of the first coil with respect to an optical axis, and the elastic member can electrically connect the second coil and the substrate.

The elastic member comprises an upper elastic member disposed on an upper surface of the holder, the upper elastic member comprises first and second upper elastic members spaced apart from each other, the first upper elastic member can be coupled to one end part of the second coil, and the second upper elastic member can be coupled to the other end part of the second coil.

The elastic member comprises a lower elastic member disposed on the lower surface of the holder, and the lower elastic member may be formed integrally.

The magnet comprises a first magnet interacting with the first coil and a second magnet interacting with the second coil, and the first coil and the second coil can move the holder in the optical axis direction.

The second coil may be spaced apart from the substrate.

The upper elastic member may comprise an inner part coupled to an upper surface of the holder, an outer part coupled to an upper surface of the housing, a connection part connecting the inner part and the outer part, and a terminal part extending from the outer part, the terminal part being coupled to a terminal of the substrate, and the housing may comprise a groove formed on the upper surface of the housing at a position corresponding to the terminal of the substrate.

The magnet comprises a first magnet interacting with the first coil, the first magnet comprises a first surface facing the first coil, and in a direction perpendicular to the first surface of the first magnet, the first coil comprises a first part that does not overlap with the first magnet, and when viewed from the inside of the housing, at least a part of the first part of the first coil may be covered by the housing.

A driver IC is comprised that is disposed on the substrate, the driver IC comprises a sensing part that detects the magnet, the magnet comprises a first magnet part having a N pole and a S pole, a second magnet part that is disposed on the first magnet part and has a N pole and a S pole, and a neutral part that is disposed between the first magnet part and the second magnet part, and the driver IC is disposed within the first coil and may overlap with the neutral part of the magnet in a direction perpendicular to an optical axis.

One end part of the first coil and the other end part of the first coil can be coupled to the substrate.

Both one end part of the first coil and the other end part of the first coil may be directly coupled to the substrate.

Any one of one end part of the first coil and the other end part of the first coil may be coupled to the substrate and the other one of one end part of the first coil and the other end part of the first coil may be coupled to the elastic member.

The elastic member comprises a lower elastic member disposed on the lower surface of the holder,

the lower elastic member comprises first and second lower elastic members spaced apart from each other, the first lower elastic member may be coupled to one end part of the second coil, and the second lower elastic member may be coupled to the other end part of the second coil.

The elastic member comprises an upper elastic member disposed on the upper surface of the holder, and a lower elastic member disposed on the lower surface of the holder, and the upper elastic member may be coupled to one end part of the second coil, and the lower elastic member may be coupled to the other end part of the second coil.

The lens driving device may comprise a yoke disposed on the upper surface of the magnet.

A camera device according to a first embodiment of the present disclosure may comprise a printed circuit board; an image sensor disposed on the printed circuit board; a lens driving device disposed on the printed circuit board; and a lens coupled to the lens driving device.

An optical device according to a first embodiment of the present disclosure may comprise a main body; a camera device disposed in the main body; and a display disposed in the main body and outputting at least one of an image and a video captured by the camera device.

A lens driving device according to a second embodiment of the present disclosure comprises: a housing; a bobbin disposed within the housing; a magnet comprising a first magnet part disposed on a first side of the housing and a second magnet part positioned on an opposite side of the first side; a coil disposed on the bobbin and comprising a first coil part facing the first magnet part and a second coil part facing the second magnet part; and a position sensor disposed on the first side of the housing, in which the first coil part and the second coil part are disposed to be offset in opposite directions with respect to a virtual plane that is perpendicular to an optical axis, passes through the optical axis, and is parallel to a direction from the first side to the second side.

At least a part of the position sensor may overlap at least a part of the second magnet part in a direction parallel to the virtual surface.

At least a part of the position sensor may overlap at least a part of the second coil part in a direction parallel to the virtual surface.

A sensing magnet disposed on the bobbin opposite the position sensor may be provided. At least a part of the sensing magnet may overlap the second magnet part in a direction parallel to the virtual plane.

At least a part of the sensing magnet may overlap the second coil part in a direction parallel to the virtual plane.

At least a part of the first coil part may overlap the second coil part in a direction parallel to the virtual surface.

At least a part of the first magnet part may overlap at least a part of the second magnet part in a direction parallel to the virtual surface.

The first coil part may comprise a first part that overlaps the second coil part in a direction parallel to the virtual plane and a second part that does not overlap the second coil part.

The length of the first part of the housing in a direction perpendicular to the virtual plane may be less than the length of the second part of the housing in a direction perpendicular to the virtual plane.

The lens driving device comprises an elastic member coupled with the bobbin and the housing; and a circuit board disposed on the first side of the housing, wherein the first coil part and the second coil part are electrically connected to the elastic member, and the elastic member may be electrically connected to the circuit board. Each of the first coil part and the second coil part can have a ring shape having a hollow.

The housing comprises a third side and a fourth side disposed between the first side and the second side and positioned opposite to each other, and the magnet may not be disposed on the third and fourth sides of the housing.

The position sensor may not overlap the first magnet part in a direction parallel to the virtual plane.

The coil may not be disposed on the outer surface of the bobbin opposite each of the third and fourth sides of the housing.

According to another embodiment, a lens driving device comprises: a housing; a bobbin disposed within the housing; a magnet comprising a first magnet part disposed on a first side of the housing and a second magnet part positioned on an opposite side of the first side; a coil disposed on the bobbin and comprising a first coil part facing the first magnet part and a second coil part facing the second magnet part; and a position sensor disposed on the first side of the housing, in which the first coil part is disposed adjacent to one of two corners of the housing that are opposite to each other with respect to an optical axis, and the second coil part is disposed adjacent to the other remaining corner of two corners of the housing that are opposite to each other with respect to an optical axis.

### [Advantageous Effect]

Through the first embodiment of the present disclosure, magnetic interference from surrounding camera devices can be minimized in a structure in which a plurality of camera devices are disposed in a parallel manner.

Therefore, more precise auto focus control is possible.

Furthermore, through the first embodiment of the present disclosure, an ultra-wide camera device can be provided in which magnetic interference from camera devices on both sides is minimized so as to be placed in the center of a triple camera structure.

In addition, through the first embodiment of the present disclosure, an ultra-wide camera device can be provided in which magnetic interference with adjacent camera devices is minimized even when disposed as a dual camera.

In the second embodiment of the present disclosure, by disposing the position sensor and the driving magnet on one side of the housing and disposing the sensing magnet on the bobbin so as to face the position sensor, the magnetic interference between the sensing magnet and the magnet of the actuator disposed adjacently can be reduced, thereby improving the accuracy and reliability of the AF drive.

The second embodiment of the present disclosure performs AF driving using two magnet parts and two coil parts corresponding thereto, and is therefore suitable for the design of a large-diameter lens driving device.

### [Description of Drawings]

FIG. 1 is a perspective view illustrating a lens driving device according to a first embodiment of the present disclosure.
FIG. 2 is a cross-sectional view taken along line a1a of FIG. 1.
FIG. 3 is a cross-sectional view taken from b1b in FIG. 1.
FIG. 4 is a cross-sectional view taken in a direction perpendicular to the optical axis of a lens driving device according to the first embodiment of the present disclosure.
FIG. 5 is an exploded perspective view illustrating a lens driving device according to a first embodiment of the present disclosure.
FIG. 6 is a perspective view illustrating a lens driving device according to the first embodiment of the present disclosure with the cover removed.
Fig. 7 is a perspective view illustrating the lens driving device in the state of Fig. 6, viewed from a different direction than Fig. 6.
FIG. 8 is a perspective view illustrating a fixing part of a lens driving device according to a first embodiment of the present disclosure.
FIG. 9 is a perspective view illustrating a moving part of a lens driving device according to a first embodiment of the present disclosure.
FIG. 10 is a perspective view illustrating an elastic member of a lens driving device according to the first embodiment of the present disclosure.
FIG. 11a is a perspective view illustrating a driving part and an upper elastic member of a lens driving device according to a first embodiment of the present disclosure.
FIG. 11b is a view illustrating the substrate and related components of a lens driving device according to the first embodiment of the present disclosure as viewed from the inside.
Fig. 12 is a partial perspective view illustrating the lens driving device in the state of Fig. 11a as seen from a different direction than Fig. 11a.
FIG. 13 is a perspective view illustrating a part where the upper elastic member and the substrate of the lens driving device according to the first embodiment of the present disclosure are coupled.
FIG. 14 is a perspective view illustrating a part where an upper elastic member and a coil are coupled in a lens driving device according to a first embodiment of the present disclosure.
FIG. 15 is a partial perspective cross-sectional view illustrating the first coil of the lens driving device according to the first embodiment of the present disclosure as viewed from the inside of the housing.
Fig. 16 (a) is a perspective view illustrating a lens driving device according to a modified example with the cover removed, and (b) is a cross-sectional view.

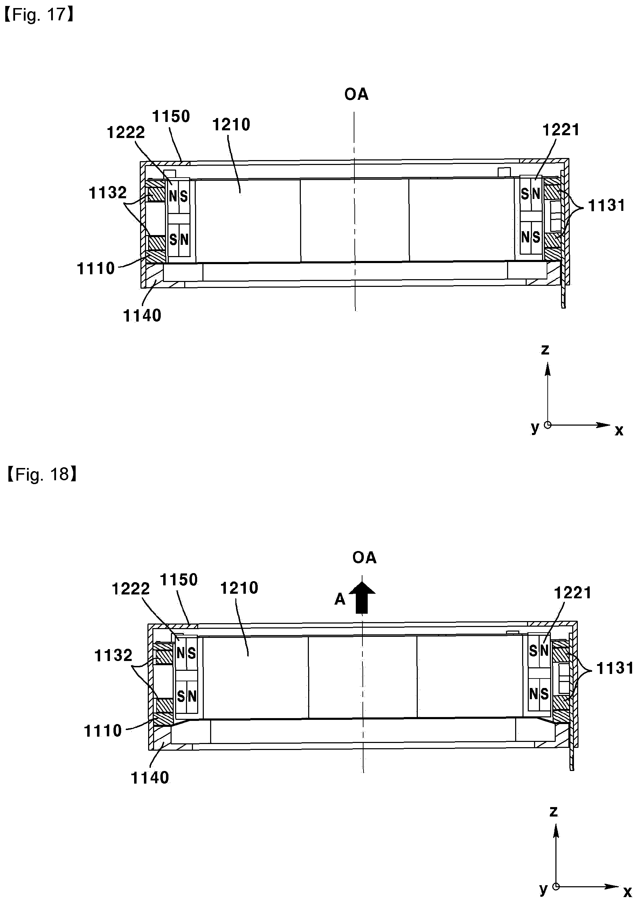

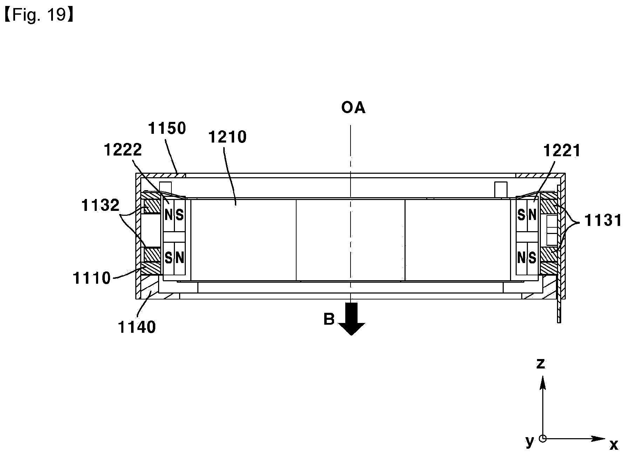

FIGS. 17 to 19 are views for explaining the auto focus driving of the lens driving device according to the first embodiment of the present disclosure. FIG. 17 is a cross-sectional view illustrating the state of the moving part in the initial state where no current is applied to the coil. FIG. 18 is a cross-sectional view illustrating the state where the moving part moves upward in the optical axis direction when forward current is applied to the coil. FIG. 19 is a cross-sectional view illustrating the state where the moving part moves downward in the optical axis direction when reverse current is applied to the coil.
FIG. 20 is an exploded perspective view illustrating a camera device according to the first embodiment of the present disclosure.
FIG. 21 is a conceptual diagram illustrating a triple camera device according to the first embodiment of the present disclosure.
FIG. 22 is a perspective view illustrating an optical device according to the first embodiment of the present disclosure.
FIG. 23 is a perspective view illustrating an optical device according to a modified example.
Fig. 24 is an exploded perspective view illustrating a lens driving device according to a second embodiment of the present disclosure.
Fig. 25 is a perspective view illustrating the lens driving device excluding the cover member of Fig. 24.
FIG. 26 is an exploded perspective view illustrating the bobbin and housing.
FIG. 27a is a first perspective view illustrating the bobbin, coil, sensing magnet, and balancing magnet.
FIG. 27b is a second perspective view illustrating the bobbin, coil, sensing magnet, and balancing magnet.
FIG. 28a is a first perspective view illustrating the housing, magnet, position sensor, and capacitor.
FIG. 28b is a second perspective view illustrating the housing, magnet, position sensor, and capacitor.
Fig. 29 is a plan view illustrating the upper elastic member.
Fig. 30 is a plan view illustrating the lower elastic member.
FIG. 31 is a coupling diagram illustrating the lower elastic member, the first coil part, the second coil part, and the circuit board.
FIG. 32 is a perspective view illustrating the circuit board, position sensor, capacitor, magnet, and coil.
FIG. 33 is a perspective view illustrating the circuit board, the lower elastic member, and the base.
Fig. 34a is a cross-sectional view illustrating the lens driving device in the AB direction of Fig. 2.
Fig. 34b is a cross-sectional view illustrating the lens driving device in the CD direction of Fig. 2.
Fig. 34c is a cross-sectional view illustrating the lens driving device in the EF direction of Fig. 2.
FIG. 35 is a plan view illustrating the coil, magnet, position sensor, sensing magnet, balancing magnet, and capacitor.
FIG. 36 1s a conceptual diagram illustrating a triple camera device according to a second embodiment of the present disclosure.
FIG. 37 1s an exploded perspective view illustrating a camera module according to a second embodiment of the present disclosure.
FIG. 38 1s a perspective view illustrating a portable terminal according to a second embodiment of the present disclosure.
FIG. 39 1s a configuration diagram illustrating the portable terminal illustrated in FIG. 38.

### [Best Mode]

Hereinafter, preferred embodiments of the present disclosure will be described in detail with reference to the attached drawings.

However, the technical idea of the present disclosure is not limited to some of the embodiments described, but can be implemented in various different forms, and within the scope of the technical idea of the present disclosure, one or more of the components among the embodiments can be selectively coupled or substituted for use.

In addition, terms (comprising technical and scientific terms) used in the embodiments of the present disclosure can be interpreted as having a meaning that can be generally understood by a person having ordinary skill in the technical field to which the present disclosure belongs, unless explicitly and specifically defined and described, and terms that are commonly used, such as terms defined in a dictionary, can be interpreted in consideration of the contextual meaning of the relevant technology.

Additionally, the terms used in the embodiments of the present disclosure are for the purpose of describing the embodiments and are not intended to limit the present disclosure.

In this specification, the singular may also comprise the plural unless specifically stated otherwise in the phrase, and when it is described as " at least one or one or more of A, B, C", it may comprise one or more of all combinations that can be combined with A, B, C.

In addition, when describing components of embodiments of the present disclosure, terms such as first, second, A, B, (a), (b), or the like may be used. These terms are only intended to distinguish the components from other components, and are not intended to limit the nature, order, or sequence of the components.

In addition, when a component is described as being 'connected', 'coupled', or 'linked' to another component, it may comprise not only cases where the component is 'connected', 'coupled', or 'linked' directly to the other component, but also cases where the component is 'connected', 'coupled', or 'linked' by another component between the component and the other component.

In addition, when described as being formed or disposed "above" or "below" each component, "above" or "below" comprises not only the case where the two components are in direct contact with each other, but also the case where one or more other components are formed or disposed between the two components. In addition, when expressed as "above" or "below", the meaning of the downward direction as well as the upward direction based on one component may be comprised.

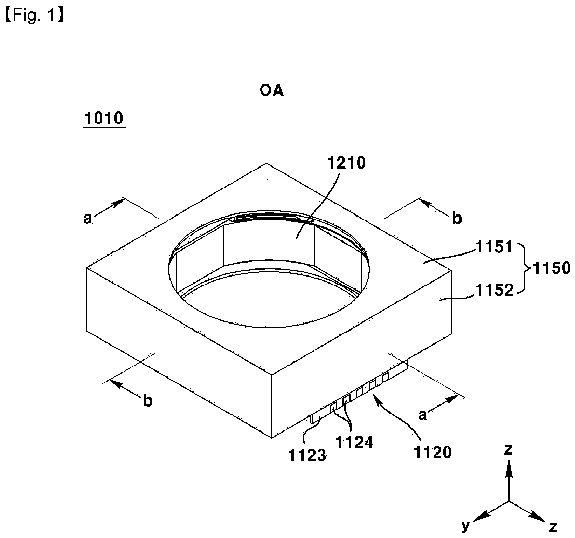

The 'optical axis (see OA of Fig. 1, or the like) direction' used below is defined as the optical axis direction of a lens and/or image sensor coupled to a lens driving device.

The 'vertical direction' used below may be a direction parallel to or the same as the optical axis direction. The vertical direction may correspond to the 'z-axis direction'. The 'horizontal direction' used below may be a direction perpendicular to the vertical direction. In other words, the horizontal direction may be a direction perpendicular to the optical axis. Therefore, the horizontal direction may comprise the 'x-axis direction' and the 'y-axis direction'.

The 'auto focus (AF) function' used below is defined as a function that automatically focuses on a subject by adjusting the distance to the image sensor by moving the lens in the optical axis direction according to the distance to the subject so that a clear video of the subject can be obtained on the image sensor. In addition, 'closed-loop auto focus (CLAF) control' is defined as detecting the distance between the image sensor and the lens to provide real-time feedback control of the position of the lens in order to improve the accuracy of focus adjustment.

Hereinafter, the configuration of a lens driving device according to the first embodiment and a modified example of the present disclosure will be described with reference to the drawings.

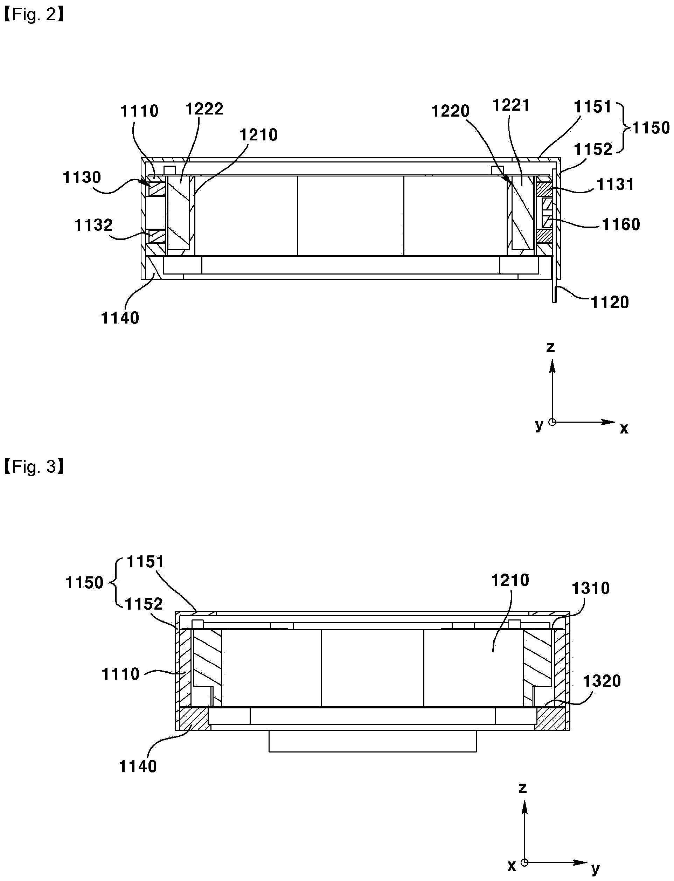

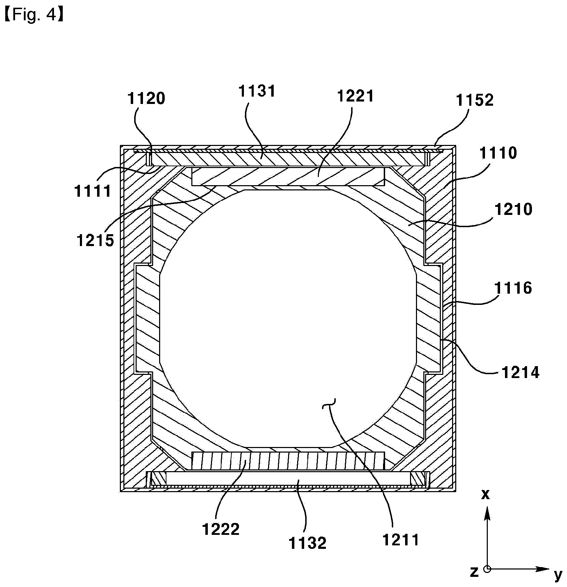

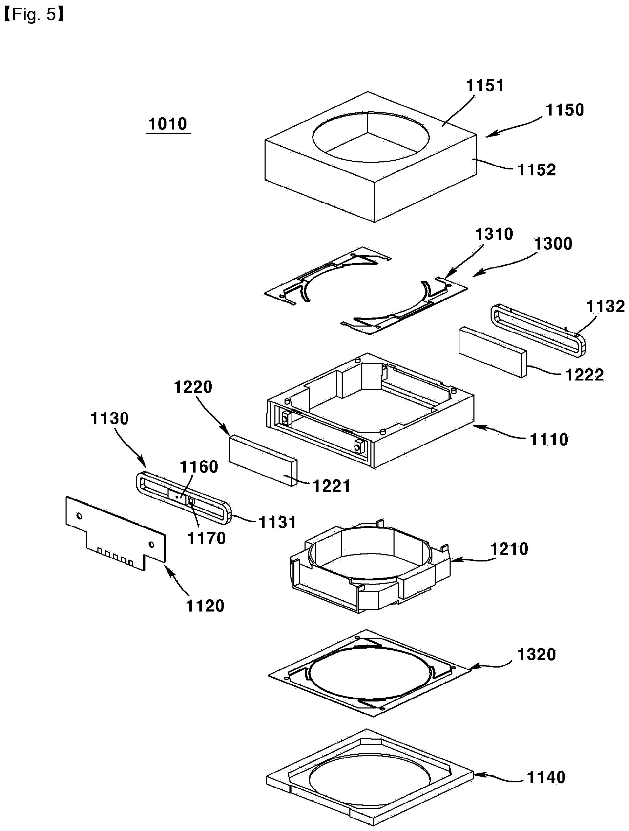

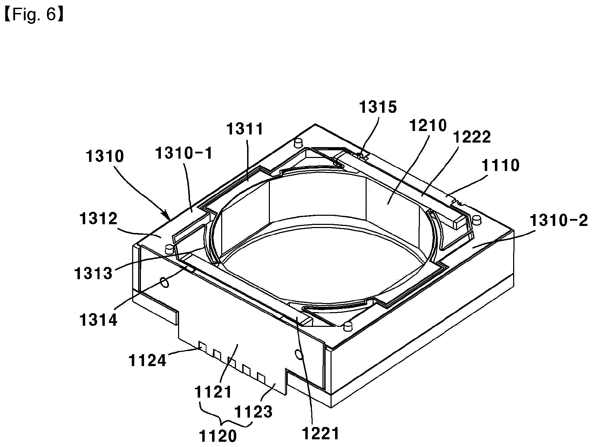

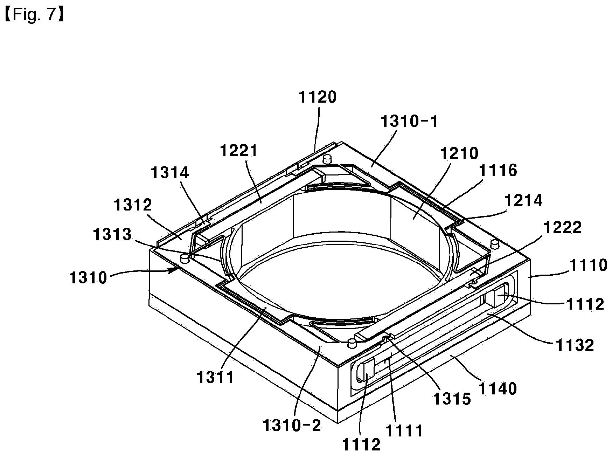

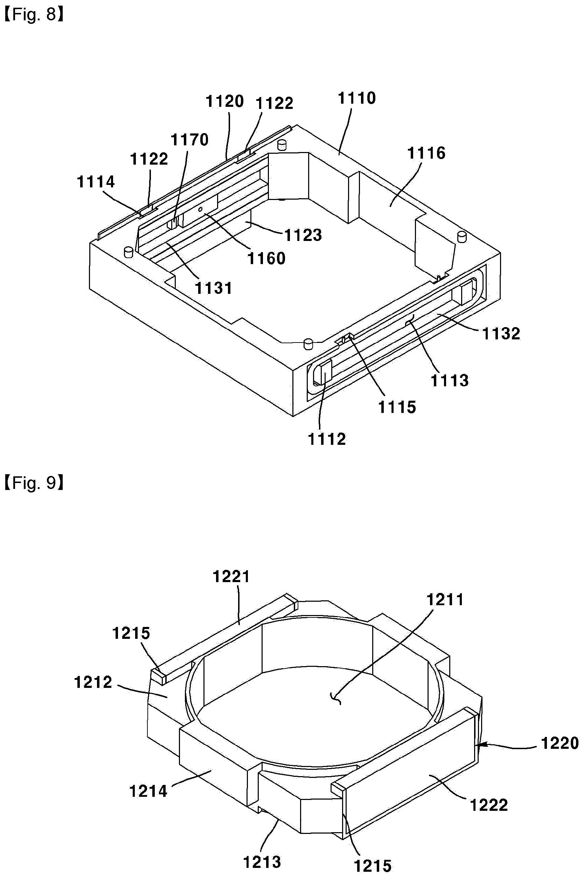

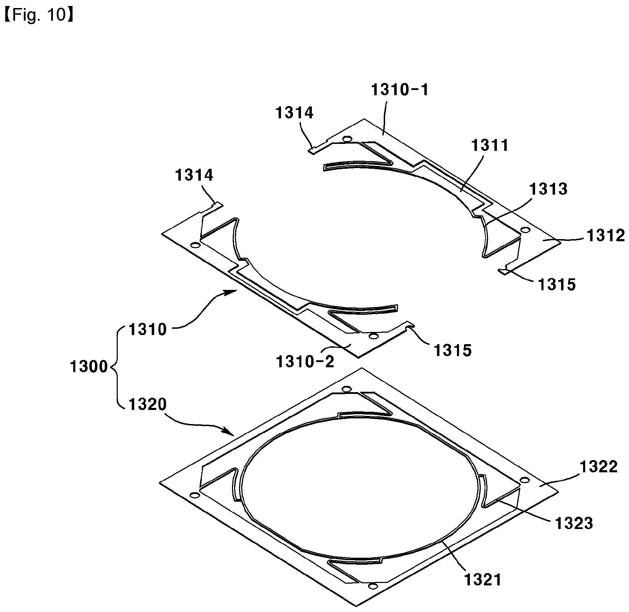

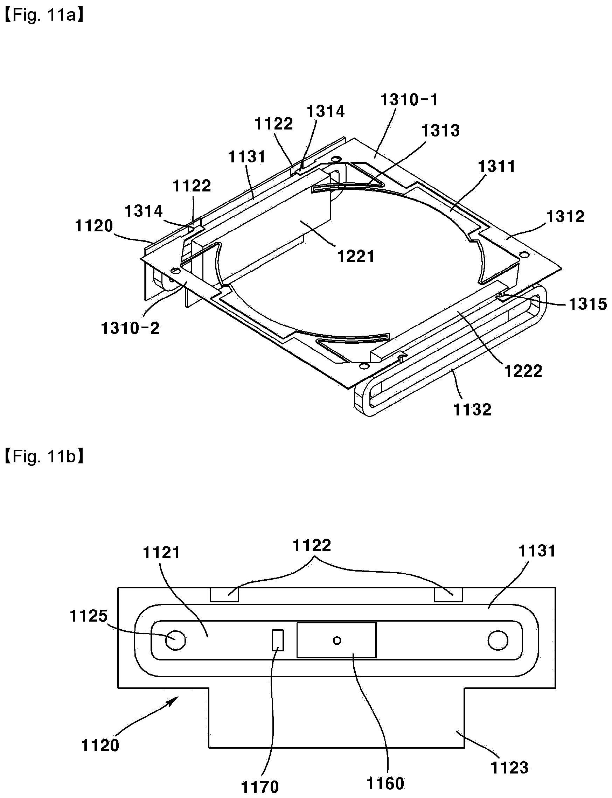

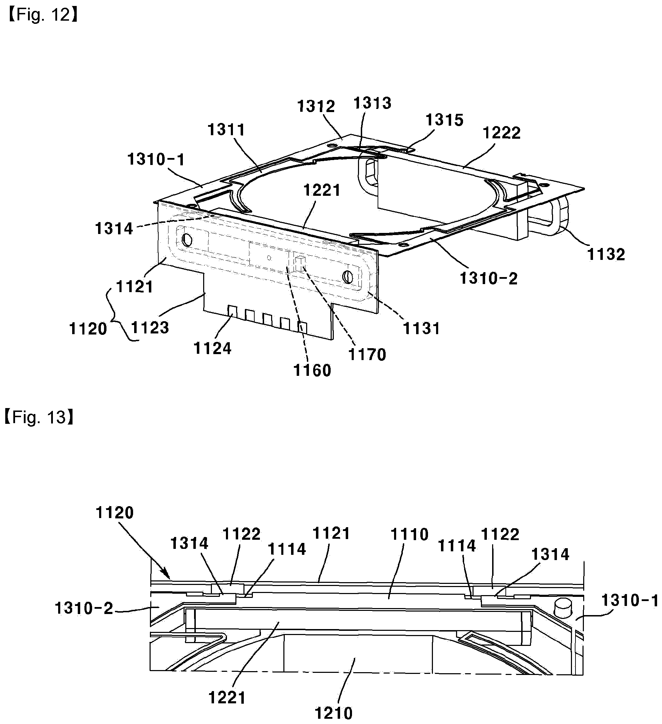

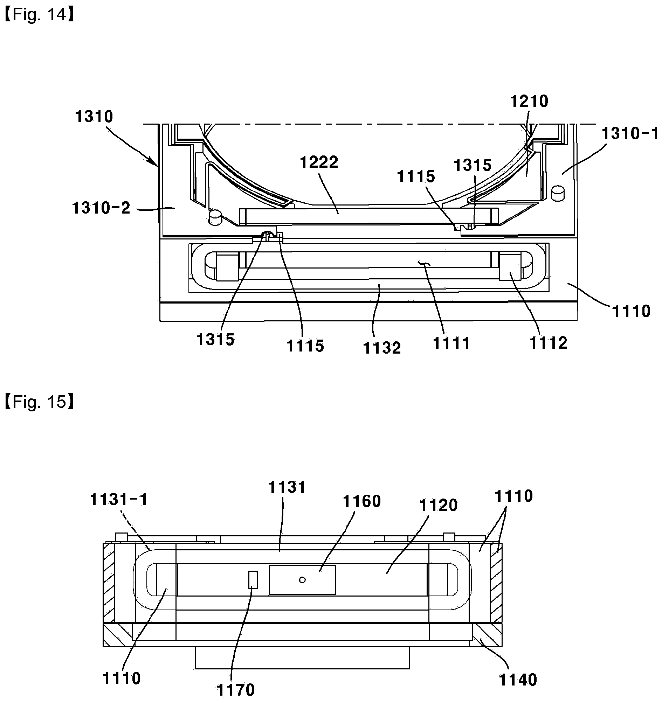

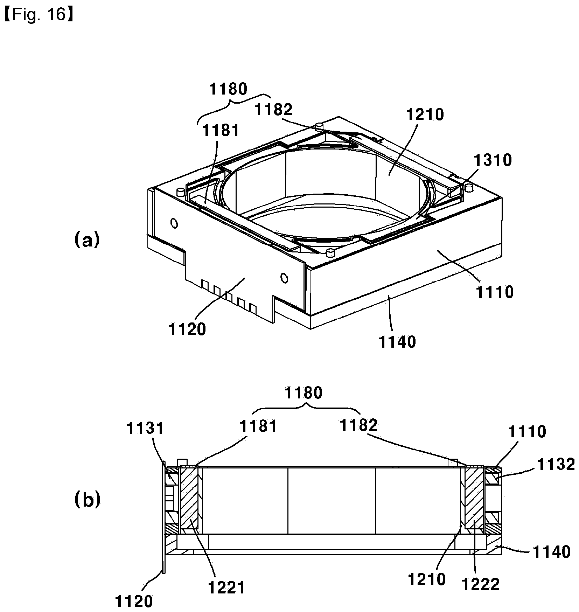

FIG. 1 is a perspective view illustrating a lens driving device according to a first embodiment of the present disclosure, FIG. 2 is a cross-sectional view taken along line a1a of FIG. 1, FIG. 3 is a cross-sectional view taken from b1b in FIG. 1, FIG. 4 is a cross-sectional view taken in a direction perpendicular to the optical axis of a lens driving device according to the first embodiment of the present disclosure, FIG. 5 is an exploded perspective view illustrating a lens driving device according to a first embodiment of the present disclosure, FIG. 6 is a perspective view illustrating a lens driving device according to the first embodiment of the present disclosure with the cover removed, Fig. 7 is a perspective view illustrating the lens driving device in the state of Fig. 6, viewed from a different direction than Fig. 6, FIG. 8 is a perspective view illustrating a fixing part of a lens driving device according to a first embodiment of the present disclosure, FIG. 9 is a perspective view illustrating a moving part of a lens driving device according to a first embodiment of the present disclosure, FIG. 10 is a perspective view illustrating an elastic member of a lens driving device according to the first embodiment of the present disclosure, FIG. 11a is a perspective view illustrating a driving part and an upper elastic member of a lens driving device according to a first embodiment of the present disclosure, FIG. 11b is a view illustrating the substrate and related components of a lens driving device according to the first embodiment of the present disclosure as viewed from the inside, Fig. 12 is a partial perspective view illustrating the lens driving device in the state of Fig. 11a as seen from a different direction than Fig. 11a, FIG. 13 is a perspective view illustrating a part where the upper elastic member and the substrate of the lens driving device according to the first embodiment of the present disclosure are coupled, FIG. 14 is a perspective view illustrating a part where an upper elastic member and a coil are coupled in a lens driving device according to a first embodiment of the present disclosure, FIG. 15 is a partial perspective cross-sectional view illustrating the first coil of the lens driving device according to the first embodiment of the present disclosure as viewed from the inside of the housing, and Fig. 16 (a) is a perspective view illustrating a lens driving device according to a modified example with the cover removed, and (b) is a cross-sectional view.

The lens driving device 1010 may be a voice coil motor (VCM). The lens driving device 1010 may be a lens driving motor. The lens driving device 1010 may be a lens driving actuator. The lens driving device 1010 may comprise an AF module.

The lens driving device 1010 may comprise a fixed part 1100. The fixed part 1100 may be a part that is relatively fixed when the moving part 1200 moves. The moving part 1200 may move relative to the fixed part 1100.

The lens driving device 1010 may comprise a housing 1110. The fixing part 1100 may comprise a housing 1110. The housing 1110 may be disposed on the base 1140. The housing 1110 may be disposed within the cover 1150. The housing 1110 may be disposed on the outside of the holder 1210. The housing 1110 may be formed as an injection molded product. The housing 1110 may be formed of a non-conductive material.

The housing 1110 may comprise a groove 1111. The groove 1111 may be a coil receiving groove. The groove 1111 may be formed concavely on an outer surface of the housing 1110. The groove 1111 may be formed recessed from an outer surface of the housing 1110. A coil 1130 may be disposed in the groove 1111. At least a part of the groove 1111 may comprise a shape corresponding to the coil 1130.

The housing 1110 may comprise a protrusion 1112. The protrusion 1112 may be a coil winding protrusion. The protrusion 1112 may be formed on an outer surface of the housing 1110. The protrusion 1112 may be positioned within the groove 1111. A coil 1130 may be wound around the protrusion 1112. The protrusion 1112 may comprise at least two protrusions that support the inner side of the coil 1130 from both sides.

The housing 1110 may comprise a hole 1113. The hole 1113 may be formed between the coil 1130 and the magnet 1220. The hole 1113 may penetrate a side wall of the housing 1110. The side wall of the housing 1110 may be referred to as a side part or a side plate. The hole 1113 may be disposed between the coil 1130 and the magnet 1220.

The housing 1110 may comprise a groove 1114. The groove 1114 may be a groove for accommodating a conductive member. The groove 1114 may be formed on an upper surface of the housing 1110. The groove 1114 may be formed at a position corresponding to a terminal 1122 of a substrate 1120. At least a part of the conductive member may be received in the groove 1114. A solder ball may be accommodated in the groove 1114. A solder ball may be disposed in the groove 1114. The groove 1114 may be disposed at a position corresponding to a terminal part 1314 of the upper elastic member 13310. The groove 1114 may be disposed below the terminal part 1314 of the upper elastic member 13310.

The housing 1110 may comprise a groove 1115. The groove 1115 may be a coil end avoidance groove. The groove 1115 may be formed to avoid both ends of the second coil 1132. The groove 1115 may be formed to allow the second coil 1132 to pass through. The groove 1115 may be formed on an outer surface or an inner surface of the housing 1110. The groove 1115 may comprise a plurality of grooves. The groove 1115 may comprise two grooves. The groove 1115 may comprise a first groove formed on an outer surface of an upper part of the housing 1110 and a second groove formed on an inner surface of an upper part of the housing 1110.

The housing 1110 may comprise a groove 1116. The groove 1116 may be a stopper accommodation groove. A protrusion 1214 of the holder 1210 may be disposed in the groove 1116. At least a part of the groove 1116 may have a shape corresponding to the protrusion 1214 of the holder 1210. When the holder 1210 rotates, the protrusion 1214 of the holder 1210 may come into contact with the groove 1116 of the housing 1110. In addition, when the holder 1210 moves in a direction perpendicular to the optical axis, the protrusion 1214 of the holder 1210 may come into contact with the groove 1116 of the housing 1110.

One of the grooves 1111, groove 1114, groove 1115 and groove 1116 of the housing 1110 may be referred to as the 'first groove', another may be referred to as the 'second groove', another may be referred to as the 'third groove' and the remaining one may be referred to as the 'fourth groove'.

The lens driving device 1010 may comprise a substrate 1120. The fixing part 1100 may comprise a substrate 1120. The substrate 1120 may be a circuit board. The substrate 1120 may be a printed circuit board. The substrate 1120 may comprise a flexible printed circuit board (FPCB). The substrate 1120 may be disposed in the housing 1110. The substrate 1120 may be disposed on a side plate of the housing 1110. The substrate 1120 may be disposed on an outer surface of the housing 1110. The substrate 1120 may be disposed parallel to the optical axis.

The substrate 1120 may comprise a body part 1121. A first coil 1131 may be disposed in the body part 1121. The first coil 1131 may be disposed on an inner surface of the body part 1121. The body part 1121 may be disposed in the housing 1110. The body part 1121 may be disposed on an outer surface of the housing 1110.

The substrate 1120 may comprise a terminal 1122. The terminal 1122 may be an upper terminal. The terminal 1122 may be formed on the body part 1121. The terminal 1122 may be formed on the inner surface of the body part 1121. The terminal 1122 may be formed on the upper part of the body part 1121. The terminal 1122 may be coupled to the upper elastic member 1310. The terminal 1122 may comprise a plurality of terminals. The terminal 1122 may comprise two terminals. The terminal 1122 may comprise first and second terminals.

The substrate 1120 may comprise a terminal part 1123. The terminal part 1123 may extend from the body part 1121. The terminal part 1123 may extend downward from the body part 1121. The terminal part 1123 may be formed at a lower part of the substrate 1120. The terminal part 1123 may be coupled to a printed circuit board 1050.

The substrate 1120 may comprise a terminal 1124. The terminal 1124 may be a lower terminal. The terminal 1124 may be formed on a terminal part 1123. The terminal 1124 may be formed on an outer surface of the terminal part 1123. The terminal 1124 may be formed on a lower part of the terminal part 1123. The terminal 1124 may be coupled to a printed circuit board 1050 of the camera device 1010A. The terminal 1124 may comprise a plurality of terminals. The terminal 1124 may comprise five terminals. The terminal 1124 may be electrically connected to a driver IC 1160.

One of the terminals 1122 and 1124 of the substrate 1120 may be referred to as the 'first terminal' and the other may be referred to as the 'second terminal'.

The substrate 1120 may comprise a hole 1125. The hole 1125 of the substrate 1120 may be coupled with the housing 1110. The hole 1125 may be coupled with a protrusion of the housing 1110. The protrusion of the housing 1110 may be inserted into the hole 1125 of the substrate 1120. The hole 1125 may comprise a plurality of holes. The hole 1125 may comprise two holes.

The lens driving device 1010 may comprise a coil 1130. The fixed part 1100 may comprise a coil 1130. The driving part may comprise a coil 1130. The AF driving part may comprise a coil 1130. The coil 1130 may interact with the magnet 1220. The coil 1130 may move the magnet 1220 in the optical axis direction. The coil 1130 may move the magnet 1220 in the optical axis direction through interaction with the magnet 1220. The coil 1130 may face the magnet 1220. The coil 1130 may be disposed at a position corresponding to the magnet 1220. The coil 1130 may overlap the magnet 1220 in a direction perpendicular to the optical axis. The coil 1130 may be placed on the substrate 1120. The coil 1130 may be placed on the housing 1110. The coil 1130 may be placed on the fixing part 1100.

The coil 1130 can comprise a plurality of coils. The coil 1130 can comprise two coils. The two coils can be electrically connected. Alternatively, the two coils can be electrically separated. The two coils can be spaced apart from each other.

The coil 1130 may comprise a first coil 1131. The first coil 1131 may interact with a first magnet 1221. The first coil 1131 may move the first magnet 1221 in the optical axis direction. The first coil 1131 may move the first magnet 1221 in the optical axis direction through interaction with the first magnet 1221. The first coil 1131 may face the first magnet 1221. The first coil 1131 may be disposed at a position corresponding to the first magnet 1221. The first coil 1131 may overlap the first magnet 1221 in a direction perpendicular to the optical axis. The first coil 1131 may be placed on the substrate 1120. The first coil 1131 may be placed on the housing 1110. The first coil 1131 may be placed on the fixing part 1100. The first coil 1131 may move the holder 1210 in the optical axis direction.

Both one end part of the first coil 1131 and the other end part of the first coil 1131 can be directly coupled to the substrate 1120. Through this, the first coil 1131 can be electrically connected to the driver IC 1160. In a variation, one of the one end part of the first coil 1131 and the other end part of the first coil 1131 can be directly coupled to the substrate 1120 and the other can be directly coupled to the elastic member 1300. At this time, the elastic member 1300 can be the upper elastic member 1310. In other words, in a variation, the first coil 1131 can be electrically connected to the driver IC 1160 through the substrate 1120 and the elastic member 1300.

The first magnet 1221 may comprise a first surface facing the first coil 1131. At this time, in a direction perpendicular to the first surface of the first magnet 1221, the first coil 1131 may comprise a first part 1131-1 that does not overlap with the first magnet 1221. When viewed from the inside of the housing 1110, at least a part of the first part 1131-1 of the first coil 1131 may be covered by the housing 1110. The width of the first coil 1131 may be greater than the width of the first magnet 1221. The first coil 1131 may comprise a part that does not interact with the first magnet 1221. The first part 1131-1 of the first coil 1131 may not interact with the first magnet 1221 or the force exerted on the interaction may be smaller than that of other parts of the first coil 1131.

The coil 1130 may comprise a second coil 1132. The second coil 1132 may be disposed on the opposite side of the first coil 1131 with respect to the optical axis. The second coil 1132 may move the holder 1210 in the optical axis direction. The second coil 1132 may be spaced apart from the substrate 1120. The second coil 1132 may be disposed in the housing 1110. The second coil 1132 may be disposed in the fixing part 1100. The second coil 1132 may be separated from the first coil 1131. The second coil 1132 may be spaced apart from the first coil 1131. The second coil 1132 may be electrically separated from the first coil 1131. Alternatively, the second coil 1132 may be electrically connected to the first coil 1131.

The second coil 1132 can interact with the second magnet 1222. The second coil 1132 can move the second magnet 1222 in the optical axis direction. The second coil 1132 can move the second magnet 1222 in the optical axis direction through interaction with the second magnet 1222. The second coil 1132 can face the first magnet 1222. The second coil 1132 can face the second magnet 1222. The second coil 1132 can be disposed at a position corresponding to the second magnet 1222. The second coil 1132 can overlap the second magnet 1222 in a direction perpendicular to the optical axis.

Both one end part of the second coil 1132 and the other end part of the second coil 1132 can be directly coupled to the upper elastic member 1310. The second coil 1132 can be coupled to the upper elastic member 1310 through a conductive member. The second coil 1132 can be coupled to the upper elastic member 1310 through soldering or welding. Through this, the second coil 1132 can be electrically connected to the driver IC 1160. The second coil 1132 can receive current from the driver IC 1160.

The lens driving device 1010 may comprise a base 1140. The fixing part 1100 may comprise a base 1140. The base 1140 may be positioned below the housing 1110. The base 1140 may be positioned below the holder 1210. The base 1140 may be coupled to the cover 1150. The base 1140 may come into contact with the holder 1210 when the holder 1210 moves downward in the optical axis direction as much as possible.

The lens driving device 1010 may comprise a cover 1150. The fixing part 1100 may comprise a cover 1150. The cover 1150 may be placed on the base 1140. The cover 1150 may be coupled to the base 1140. The cover 1150 may be fixed to the base 1140. The cover 1150 may be placed on the housing 1110. The cover 1150 may accommodate the housing 1110 therein. The cover 1150 may accommodate the holder 1220 therein. The cover 1150 may be a shield member. The cover 1150 may be a shield can. The cover 1150 may block electromagnetic interference (EMI). At this time, the cover member 1150 may be an EMI shield can.

The cover 1150 may comprise an upper plate 1151. The upper plate 1151 may be placed on the moving part 1200. The upward movement of the moving part 1200 may be limited by the moving part 1200 coming into contact with the upper plate 1151. The upper plate 1151 may comprise a hole through which light passes.

The cover 1150 may comprise a side plate 1152. The side plate 1152 may extend from the upper plate 1151. The side plate 1152 may be disposed on the base 1110. The side plate 1152 may be disposed on a step part that protrudes from a lower part of an outer surface of the base 1110. The side plate 1152 may be disposed on the housing 1110. The side plate 1152 may comprise a plurality of side plates. The side plate 1152 may comprise four side plates. The side plate 1152 may comprise a first side plate and a second side plate that are disposed opposite each other, and a third side plate and a fourth side plate that are disposed opposite each other. In this embodiment, the first magnet 1221 can be placed at a position corresponding to the third side plate, and the second magnet 1222 can be placed at a position corresponding to the fourth side plate.

The lens driving device 1010 may comprise a driver IC 1160. The fixing part 1100 may comprise a driver IC 1160. The driver IC 1160 may be placed on a substrate 1120. The driver IC 1160 may comprise a sensing part that detects a magnet 1220. The sensing part may comprise a Hall element (Hall IC). The sensing part may comprise a Hall sensor. The driver IC 1160 may be electrically connected to a coil 1130. The driver IC 1160 may supply current to the coil 1130. The driver IC 1160 may be electrically connected to a first coil 1131. The driver IC 1160 may supply current to the first coil 1131. The driver IC 1160 can be electrically connected to the second coil 1132. The driver IC 1160 can supply current to the second coil 1132. The driver IC 1160 can detect the movement of the first magnet 1220. The movement amount or position of the first magnet 1220 detected by the driver IC 1160 can be used for feedback of auto focus driving.

The driver IC 1160 may be placed within the first coil 1131. The driver IC 1160 may overlap with the neutral part 1220-3 of the magnet 1220 in a direction perpendicular to the optical axis. In a variation, the driver IC 1160 may be placed on the outside of the first coil 1131.

Alternatively, the lens driving device 1010 may comprise a Hall sensor. In other words, the lens driving device 1010 may comprise a Hall sensor instead of a driver IC 1160.

The lens driving device 1010 may comprise a capacitor 1170. The fixing part 1100 may comprise a capacitor 1170. The capacitor 1170 may be disposed on the substrate 1120. The capacitor 1170 may be disposed on the inner surface of the substrate 1120. The capacitor 1170 may be disposed within the first coil 1131. The capacitor 1170 may be disposed next to the driver IC 1160. The capacitor 1170 may be electrically connected to the driver IC 1160. The capacitor 1170 may remove noise generated in transmission and reception of the driver IC 1160.

As illustrated in FIG. 16, in a variation, the lens driving device 1010 may comprise a yoke 1180. The fixing part 1100 may comprise the yoke 1180. The yoke 1180 may be disposed on an upper surface of the magnet 1220. In a variation, the yoke 1180 may be disposed between the magnet 1220 and the holder 1210. Alternatively, the yoke 1180 may be disposed on a lower surface of the magnet 1220. The yoke 1180 may prevent flux leakage of the magnet 1220 and increase the force used for electromagnetic interaction with the coil 1130.

The yoke 1180 may comprise a plurality of yokes. The yoke 1180 may comprise two yokes. The yoke 1180 may comprise a first yoke 1181. The first yoke 1181 may be disposed on the first magnet 1221. The first yoke 1181 may be disposed on an upper surface of the first magnet 1221. The first yoke 1181 may be formed to have a size corresponding to the upper surface of the first magnet 1221. The yoke 1180 may comprise a second yoke 1182. The second yoke 1182 may be disposed on the second magnet 1222. The second yoke 1182 may be disposed on an upper surface of the second magnet 1222. The second yoke 1182 can be formed to a size corresponding to the upper surface of the second magnet 1222.

The lens driving device 1010 may comprise a moving part 1200. The moving part 1200 may be placed on the fixed part 1100. The moving part 1200 may be placed inside the fixed part 1100. The moving part 1200 may be placed on the fixed part 1100. The moving part 1200 may be movably placed on the fixed part 1100. The moving part 1200 may be moved relative to the fixed part 1100 by the driving part. The moving part 1200 may be moved during AF driving. A lens may be coupled to the moving part 1200. The moving part 1200 may be elastically supported by an elastic member 1300.

The lens driving device 1010 may comprise a holder 1210. The moving part 1200 may comprise the holder 1210. The holder 1210 may be placed in the housing 1110. The holder 1210 may be placed in the housing 1210. The holder 1210 may be placed on the base 1110. The holder 1210 may be placed in the cover 1150. The holder 1210 may be placed so as to be movable in the optical axis direction. The holder 1210 may be placed so as to be movable in the optical axis direction in the housing 1210. The holder 1210 may be placed so as to be movable in the optical axis direction on the base 1110. The holder 1210 may be placed so as to be movable in the optical axis direction in the cover 1150. The holder 1210 can be combined with a lens. The holder 1210 can move in the optical axis direction.

The holder 1210 may comprise a hole 1211. The hole 1211 may be hollow. A lens may be placed in the hole 1211. The hole 1211 may penetrate the holder 1210 in the optical axis direction. The hole 1211 may be placed at a position corresponding to the hole of the base 1140.

The holder 1210 may comprise a groove 1212. The groove 1212 may be a connection part avoidance groove of the upper elastic member. The groove 1212 may be concavely formed on the upper surface of the holder 1210. The groove 1212 may be formed at a position corresponding to the connection part 1313 of the upper elastic member 1310. The groove 1212 may be formed so that the connection part 1313 of the upper elastic member 1310 does not come into contact with the holder 1210 even when the holder 1210 moves upward in the optical axis direction.

The holder 1210 may comprise a groove 1213. The groove 1213 may be a connection part avoidance groove of the lower elastic member. The groove 1213 may be concavely formed on the lower surface of the holder 1210. The groove 1213 may be formed at a position corresponding to the connection part 1323 of the lower elastic member 1320. The groove 1213 may be formed so that the connection part 1323 of the lower elastic member 1320 does not come into contact with the holder 1210 even when the holder 1210 moves downward in the optical axis direction.

The holder 1210 may comprise a protrusion 1214. The protrusion 1214 may be a lateral stopper. Alternatively, the protrusion 1214 may be an anti-rotation stopper. The protrusion 1214 may protrude from a side surface of the holder 1210. The protrusion 1214 may be formed on an outer surface of the holder 1210. At least a part of the protrusion 1214 may be positioned in a groove 1116 of the housing 1110. When the holder 1210 rotates, the protrusion 1214 may catch on the housing 1110 to limit the rotation of the holder 1210. Even when the holder 1210 moves horizontally, the protrusion 1214 of the holder 1210 may come into contact with the housing 1110 to limit the amount of movement.

The holder 1210 may comprise a groove 1215. The groove 1215 may be a magnet receiving groove. The groove 1215 may be concavely formed on a side surface of the holder 1210. An adhesive for attaching a magnet 1220 to the holder 1210 may be placed in the groove 1215. The magnet 1220 may be placed in the groove 1215. The groove 1215 may comprise a shape corresponding to the magnet 1220.

One of the groove 1212, the groove 1213, and the groove 1215 of the holder 1210 may be referred to as the 'first groove', the other may be referred to as the 'second groove' and the remaining one may be referred to as the 'third groove'.

The lens driving device 1010 may comprise a magnet 1220. The moving part 1200 may comprise a magnet 1220. The driving part may comprise a magnet 1220. The magnet 1220 may be placed in the holder 1210. The magnet 1220 may be placed on an outer surface of the holder 1210. The magnet 1220 may be fixed to the holder 1210. The magnet 1220 may be coupled to the holder 1210. The magnet 1220 may be adhesively bonded to the holder 1210. The magnet 1220 may be placed inside the cover 1150. The magnet 1220 may interact with the coil 1130. The magnet 1220 can electromagnetically interact with the coil 1130. The magnet 1220 can be positioned at a position corresponding to the coil 1130. The magnet 1220 can face the coil 1130. The magnet 1220 can face the coil 1130. The magnet 1220 can overlap the coil 1130 in a direction perpendicular to the optical axis.

The magnet 1220 may be a four-pole magnet. The magnet 1220 may be a four-pole magnetization magnet. The upper part of the magnet 1220 may comprise a N pole and a S pole, the lower part of the magnet 1220 may comprise a S pole and an N pole, and the center of the magnet 1220 may be a neutral zone. In more detail, the outer surface of the upper part of the magnet 1220 may be a N pole and the inner surface of the upper part may be a S pole. The outer surface of the lower part of the magnet 1220 may be a S pole and the inner surface of the lower part may be a N pole. The upper and lower parts of the magnet 1220 may be separated from each other by the neutral zone.

The magnet 1220 may be formed by stacking two single magnets one above the other. The magnet 1220 may comprise a first magnet part 1220-1. The first magnet part 1220-1 may have an N pole and a S pole. The magnet 1220 may comprise a second magnet part 1220-2. The second magnet part 1220-2 may be disposed on the first magnet part 1220-1. The second magnet part 1220-2 may have an N pole and a S pole. The magnet 1220 may comprise a neutral part 1220-3. The neutral part 1220-3 may be disposed between the first magnet part 1220-1 and the second magnet part 1220-2.

The magnet 1220 may comprise a plurality of magnets. The magnet 1220 may comprise two magnets.

The magnet 1220 may comprise a first magnet 1221. The first magnet 1221 may be placed in the holder 1210. The first magnet 1221 may be placed on an outer surface of the holder 1210. The first magnet 1221 may be fixed to the holder 1210. The first magnet 1221 may be coupled to the holder 1210. The first magnet 1221 may be adhesively bonded to the holder 1210. The first magnet 1221 may be placed inside the cover 1150. The first magnet 1221 may interact with the first coil 1131. The first magnet 1221 may electromagnetically interact with the first coil 1131. The first magnet 1221 may be placed at a position corresponding to the first coil 1131. The first magnet 1221 may face the first coil 1131. The first magnet 1221 may face the first coil 1131. The first magnet 1221 may overlap the first coil 1131 in a direction perpendicular to the optical axis.

The magnet 1220 may comprise a second magnet 1222. The second magnet 1222 may be placed in the holder 1210. The second magnet 1222 may be placed on an outer surface of the holder 1210. The second magnet 1222 may be fixed to the holder 1210. The second magnet 1222 may be coupled to the holder 1210. The second magnet 1222 may be adhesively bonded to the holder 1210. The second magnet 1222 may be placed inside the cover 1150. The second magnet 1222 may interact with the second coil 1132. The second magnet 1222 may electromagnetically interact with the second coil 1132. The second magnet 1222 may be positioned at a position corresponding to the second coil 1132. The second magnet 1222 may face the second coil 1132. The second magnet 1222 may face the second coil 1132. The second magnet 1222 may overlap the second coil 1132 in a direction perpendicular to the optical axis.

The lens driving device 1010 may comprise an elastic member 1300. The elastic member 1300 may connect the housing 1110 and the holder 1210. The elastic member 1300 may elastically connect the housing 1110 and the holder 1210. The elastic member 1300 may movably support the holder 1210. The elastic member 1300 may support the holder 1210 to be movable in the optical axis direction. The elastic member 1300 may elastically support the holder 1210. At least a part of the elastic member 1300 may have elasticity. The elastic member 1300 may connect the second coil 1132 and the substrate 1120. The elastic member 1300 can electrically connect the second coil 1132 and the substrate 1120. The elastic member 1300 can electrically connect the first coil 1131 and the substrate 1120 or the driver IC. The elastic member 1300 can be formed of a conductor. The elastic member 1300 can be formed of a metal.

The lens driving device 1010 may comprise an upper elastic member 1310. The elastic member 1300 may comprise an upper elastic member 1310. The upper elastic member 1310 may be disposed on an upper surface of the holder 1210. The upper elastic member 1310 may be disposed on an upper part of the holder 1210. The upper elastic member 1310 may be disposed above the holder 1210. The upper elastic member 1310 may be coupled to an upper surface of the holder 1210. The upper elastic member 1310 may be fixed to an upper surface of the holder 1210. The upper elastic member 1310 may be adhered to an upper surface of the holder 1210.

The upper elastic member 1310 may comprise a plurality of upper elastic members. The upper elastic member 1310 may comprise two upper elastic members. The upper elastic member 1310 may comprise first and second upper elastic members 1310-1, 1310-2 that are spaced apart from each other.

The upper elastic member 1310 may comprise a first upper elastic member 1310-1. The first upper elastic member 1310-1 may be coupled to one end part of the second coil 1132. The first upper elastic member 1310-1 may electrically connect one end part of the second coil 1132 and the substrate 1120. The upper elastic member 1310 may comprise a second upper elastic member 1310-2. The second upper elastic member 1310-2 may be coupled to the other end part of the second coil 1132. The second upper elastic member 1310-2 may electrically connect the other end part of the second coil 1132 and the substrate 1120. The first upper elastic member 1310-1 and the second upper elastic member 1310-2 can be formed in shapes corresponding to each other.

The upper elastic member 1310 may comprise an inner part 1311. The inner part 1311 may be coupled to an upper surface of the holder 1210. The inner part 1311 may be disposed on an upper surface of the holder 1210. The inner part 1311 may be fixed to an upper surface of the holder 1210. The inner part 1311 may comprise a hole coupled with a protrusion formed on an upper surface of the holder 1210.

The upper elastic member 1310 may comprise an outer part 1312. The outer part 1312 may be coupled to an upper surface of the housing 1110. The outer part 1312 may be disposed on an upper surface of the housing 1110. The outer part 1312 may be fixed to an upper surface of the housing 1110. The outer part 1312 may comprise a hole coupled with a protrusion formed on an upper surface of the housing 1110.

The upper elastic member 1310 may comprise a connection part 1313. The connection part 1313 may connect the inner part 1311 and the outer part 1312. The connection part 1313 may elastically connect the inner part 1311 and the outer part 1312. At least a part of the connection part 1313 and the inner part 1311 may move relative to the outer part 1312. At least a part of the connection part 1313 may be elastic. The connection part 1313 may comprise a bent shape.

The upper elastic member 1310 may comprise a terminal part 1314. The terminal part 1314 may extend from the outer part 1312. The terminal part 1314 may be coupled with the terminal 1122 of the substrate 1120. The terminal part 1314 may be formed in a shape that is easy to be coupled with the terminal 1122 of the substrate 1120. The terminal part 1314 may be formed integrally with the outer part 1312.

The upper elastic member 1310 may comprise a groove 1315. One end part of the second coil 1132 may be coupled to the groove 1315. One end part of the second coil 1132 may be coupled to the groove 1315 through soldering.

The lens driving device 1010 may comprise a lower elastic member 1320. The elastic member 1300 may comprise a lower elastic member 1320. The lower elastic member 1320 may be disposed on a lower surface of the holder 1210. The lower elastic member 1320 may be disposed on a lower surface of the holder 1210. The lower elastic member 1320 may be disposed below the holder 1210. The lower elastic member 1320 may be coupled to a lower surface of the holder 1210. The lower elastic member 1320 may be fixed to a lower surface of the holder 1210. The lower elastic member 1320 may be adhered to a lower surface of the holder 1210. The lower elastic member 1320 may be formed integrally. The lower elastic member 1320 can connect the holder 1210 and the housing 1110. In addition, the lower elastic member 1320 can connect the holder 1210 and the base 1140.

The lower elastic member 1320 may comprise an inner part 1321. The inner part 1321 may be coupled to the lower surface of the holder 1210. The inner part 1321 may be disposed on the lower surface of the holder 1210. The inner part 1321 may be fixed to the lower surface of the holder 1210. The inner part 1321 may comprise a hole coupled with a protrusion formed on the lower surface of the holder 1210.

The lower elastic member 1320 may comprise an outer part 1322. The outer part 1322 may be coupled to a lower surface of the housing 1110. The outer part 1322 may be disposed on the lower surface of the housing 1110. The outer part 1322 may be fixed to the lower surface of the housing 1110. The outer part 1322 may comprise a hole coupled with a protrusion formed on the lower surface of the housing 1110. Alternatively, the outer part 1322 may be coupled to an upper surface of the base 1140. The outer part 1322 may be disposed on an upper surface of the base 1140. The outer part 1322 may be fixed to an upper surface of the base 1140. The outer part 1322 may comprise a hole coupled with a protrusion formed on an upper surface of the base 1140.

The lower elastic member 1320 may comprise a connection part 1323. The connection part 1323 may connect the inner part 1321 and the outer part 1322. The connection part 1323 may elastically connect the inner part 1321 and the outer part 1322. At least a part of the connection part 1323 and the inner part 1321 may move relative to the outer part 1322. At least a part of the connection part 1323 may be elastic. The connection part 1323 may comprise a bent shape.

In a variation, the lower elastic member 1320 may comprise a plurality of lower elastic members. The lower elastic member 1320 may comprise two lower elastic members. The lower elastic member 1320 may comprise two lower elastic members that are spaced apart from each other. The lower elastic member 1320 may comprise a first lower elastic member. The lower elastic member 1310 may comprise a second lower elastic member. The second lower elastic member may be spaced apart from the first lower elastic member. The first lower elastic member may be coupled to one end part of the second coil 1132. The second lower elastic member may be coupled to the other end part of the second coil 1132. In a variation, the upper elastic member 1310 may be formed integrally.

In another variation, both the upper elastic member 1310 and the lower elastic member 1320 may be formed integrally. In this case, the upper elastic member 1310 may be coupled to one end part of the second coil 1132. The lower elastic member 1320 may be coupled to the other end part of the second coil 1132. The upper elastic member 1310 may electrically connect one end part of the second coil 1132 and the substrate 1120. The lower elastic member 1320 may electrically connect the other end part of the second coil 1132 and the substrate 1120.

Hereinafter, the auto focus driving of the lens driving device according to the first embodiment of the present disclosure will be described with reference to the drawings.

FIGS. 17 to 19 are views for explaining the auto focus driving of the lens driving device according to the first embodiment of the present disclosure. FIG. 17 is a cross-sectional view illustrating the state of the moving part in the initial state where no current is applied to the coil. FIG. 18 is a cross-sectional view illustrating the state where the moving part moves upward in the optical axis direction when forward current is applied to the coil. FIG. 19 is a cross-sectional view illustrating the state where the moving part moves downward in the optical axis direction when reverse current is applied to the coil.

The moving part 1200 can be positioned at a position spaced apart from both the upper plate 1151 of the cover 1150 and the base 1140 in an initial position where no current is applied to the coil 1130.

When a forward current is applied to the coil 1130, the magnet 1220 can move upward in the optical axis direction due to the electromagnetic interaction between the coil 1130 and the magnet 1220 (see A of FIG. 18). At this time, the holder 1210 and the lens can move upward in the optical axis direction together with the magnet 1220. Accordingly, the distance between the lens and the image sensor can be changed, and the focus of the image formed on the image sensor through the lens can be adjusted.

When a reverse current is applied to the coil 1130, the magnet 1220 can move downward in the optical axis direction due to the electromagnetic interaction between the coil 1130 and the magnet 1220 (see B of FIG. 19). At this time, the holder 1210 and the lens can move downward in the optical axis direction together with the magnet 1220. Accordingly, the distance between the lens and the image sensor can be changed, and the focus of the image formed on the image sensor through the lens can be adjusted.

Meanwhile, during the movement process of the magnet 1220, the sensing part of the driver IC 1160 can detect the strength of the magnetic field of the magnet 1220 to detect the amount of movement or position of the magnet 1220. The amount of movement or position of the magnet 1220 detected by the driver IC 1160 can be used for auto focus feedback control.

Below, a camera device according to a first embodiment of the present disclosure will be described with reference to the drawings.

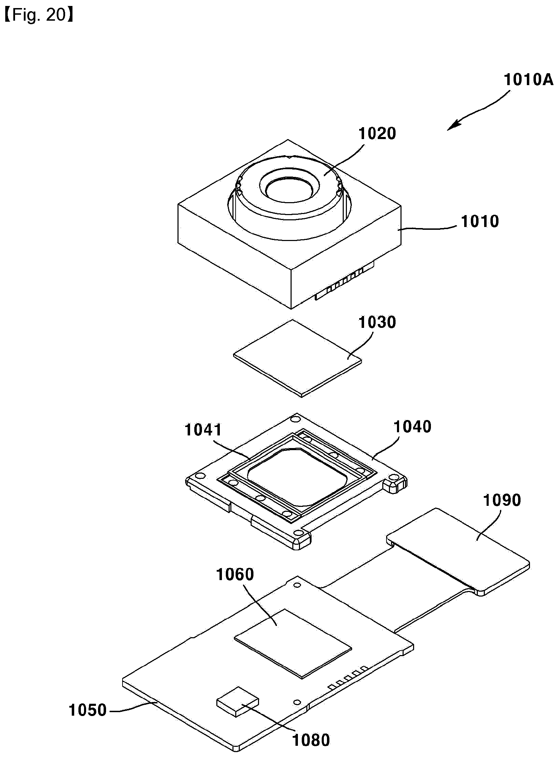

FIG. 20 is an exploded perspective view of a camera device according to the first embodiment of the present disclosure.

The camera device 1010A may comprise a camera module.

The camera device 1010A may comprise a lens module 1020. The lens module 1020 may comprise at least one lens. The lens may be positioned at a position corresponding to the image sensor 1060. The lens module 1020 may comprise a lens and a barrel. The lens module 1020 may be coupled to a holder 1210 of the lens driving device 1010. The lens module 1020 may be coupled to the holder 1210 by screw coupling and/or adhesive. The lens module 1020 may be moved integrally with the holder 1210.

The camera device 1010A may comprise a filter 1030. The filter 1030 may block light of a specific frequency band from passing through the lens module 1020 from being incident on the image sensor 1060. The filter 1030 may be disposed parallel to the xy plane. The filter 1030 may be disposed between the lens module 1020 and the image sensor 1060. The filter 1030 may be disposed on the sensor base 1040. Alternatively, the filter 1030 may be disposed on the base 1110. The filter 1030 may comprise an infrared filter. The infrared filter may block light of an infrared region from being incident on the image sensor 1060.

The camera device 1010A may comprise a sensor base 1040. The sensor base 1040 may be disposed between the lens driving device 1010 and the printed circuit board 1050. The sensor base 1040 may comprise a boss 141 on which a filter 1030 is disposed. An opening may be formed in a part of the sensor base 1040 on which the filter 1030 is disposed so that light passing through the filter 1030 may be incident on the image sensor 1060. The adhesive member may couple or adhere the base 1310 of the lens driving device 1010 to the sensor base 1040. The adhesive member may additionally serve to prevent foreign substances from entering the interior of the lens driving device 1010. The adhesive member may comprise at least one of an epoxy, a thermosetting adhesive, and an ultraviolet-curable adhesive.

The camera device 1010A may comprise a printed circuit board (PCB) 1050. The printed circuit board 1050 may be a substrate or a circuit board. A lens driving device 1010 may be disposed on the printed circuit board 1050. A sensor base 1040 may be disposed between the printed circuit board 1050 and the lens driving device 1010. The printed circuit board 1050 may be electrically connected to the lens driving device 1010. An image sensor 1060 may be disposed on the printed circuit board 1050. Various circuits, elements, control parts, or the like may be provided on the printed circuit board 1050 to convert an image formed on the image sensor 1060 into an electrical signal and transmit it to an external device.

The camera device 1010A may comprise an image sensor 1060. The image sensor 1060 may be configured to form an image by incident light passing through a lens and a filter 1030. The image sensor 1060 may be mounted on a printed circuit board 1050. The image sensor 1060 may be electrically connected to the printed circuit board 1050. For example, the image sensor 1060 may be coupled to the printed circuit board 1050 by surface mounting technology (SMT). As another example, the image sensor 1060 may be coupled to the printed circuit board 1050 by flip chip technology. The image sensor 1060 may be disposed so that its optical axis is aligned with that of the lens. In other words, the optical axis of the image sensor 1060 and the optical axis of the lens can be aligned. The image sensor 1060 can convert light irradiated onto an effective image area of the image sensor 1060 into an electrical signal. The image sensor 1060 can be any one of a CCD (charge coupled device), a MOS (metal oxide semi-conductor), a CPD, and a CID.

The camera device 1010A may comprise a motion sensor. The motion sensor may be mounted on a printed circuit board 1050. The motion sensor may be electrically connected to a control part 1080 through a circuit pattern provided on the printed circuit board 1050. The motion sensor may output rotational velocity information due to movement of the camera device 1010A. The motion sensor may comprise a two-axis or three-axis gyro sensor or an angular velocity sensor.

The camera device 1010A may comprise a control part 1080. The control part 1080 may be disposed on a printed circuit board 1050. The control part 1080 may be electrically connected to a coil 1330 of a lens driving device 1010. The control part 1080 may individually control the direction, intensity, amplitude, or the like of current supplied to the coil 1330. The control part 1080 may control the lens driving device 1010 to perform an auto focus function and/or an image stabilization function. Furthermore, the control part 1080 may perform auto focus feedback control and/or image stabilization feedback control for the lens driving device 1010.

The camera device 1010A may comprise a connector 1090. The connector 1090 may be electrically connected to a printed circuit board 1050. The connector 1090 may comprise a port for electrically connecting to an external device.

Hereinafter, a triple camera device according to a first embodiment of the present disclosure will be described with reference to the drawings.

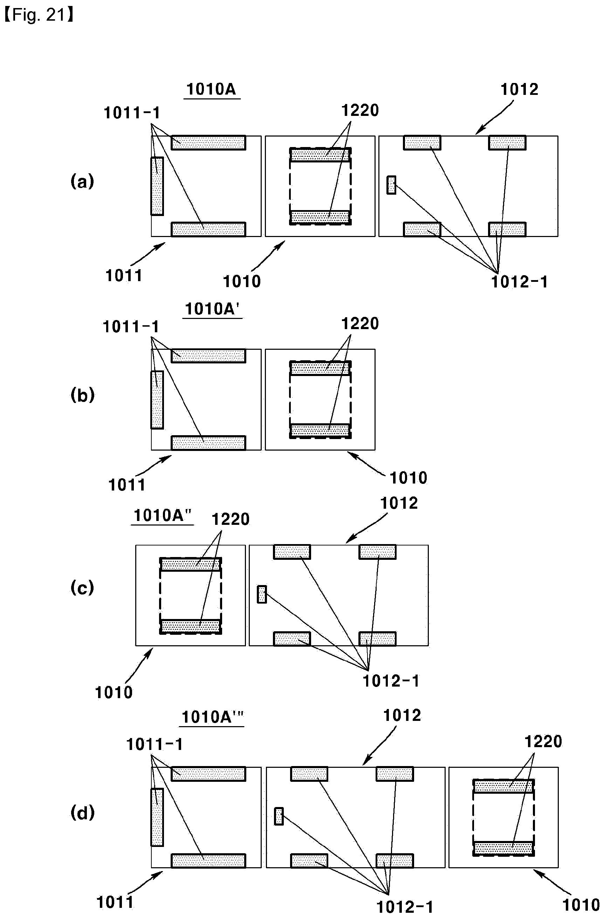

FIG. 21 is a conceptual diagram illustrating a triple camera device according to the first embodiment of the present disclosure.

As illustrated in (a) of FIG. 21, the triple camera device 1010A may comprise a first camera device 1011, a second camera device 1012, and a third camera device positioned between the first camera device 1011 and the second camera device 1012. For example, the third camera device may comprise the lens driving device 1010 described above.

The first camera device 1011 may be a main OIS camera device. The first camera device 1011 may comprise an OIS driving part and an AF driving part. The second camera device 1012 may be a zoom camera device. The second camera device 1012 may comprise an AF driving part, a zoom driving part, and an OIS driving part. The AF driving part and the zoom driving part may be formed as a single driving part. The third camera device may be an ultra wide camera device. The third camera device may be a wide-angle camera device.

The first camera device 1011 may comprise three driving magnets 1011-1. The driving magnets 1011-1 of the first camera device 1011 may be disposed except for the side adjacent to the third camera device.

The second camera device 1012 may comprise five driving magnets 1012-1. The second camera device 1012 may comprise three OIS driving magnets for OIS driving and two driving magnets for AF and Zoom driving.

The third camera device may comprise two magnets 1220. The magnets 1220 of the third camera device may be disposed to face two sides other than the sides adjacent to the first camera device 1011 and the second camera device 1012. Through this, magnetic interference of the first camera device 1011 and the second camera device 1012 on the third camera device may be minimized.

The cover 1150 of the third camera device may comprise four side plates. The side plates 1152 of the cover 1150 may comprise first and second side plates disposed opposite each other, and third and fourth side plates disposed opposite each other. The first side plate may be disposed opposite the first camera device 1011, and the second side plate may be positioned opposite the second camera device 1012. The magnet 1220 of the third camera device may comprise a first magnet 1221 positioned to face the third side plate, and a second magnet 1222 positioned to face the fourth side plate.

As illustrated in (b) of Fig. 21, the camera device 1010A' may comprise a first camera device 1011 and a third camera device. At this time, the third camera device may comprise a lens driving device 1010.

As illustrated in (c) of Fig. 21, the camera device 1010A'' may comprise a second camera device 1012 and a third camera device. At this time, the third camera device may comprise a lens driving device 1010.

As illustrated in (d) of FIG. 21, the camera device 1010A‴ may comprise a first camera device 1011, a third camera device, and a second camera device 1012 disposed between the first camera device 1011 and the third camera device. At this time, the third camera device may comprise a lens driving device 1010.

The embodiments illustrated in (a) to (d) of FIG. 21 are examples, and the lens driving device 1010 according to the present embodiment may be comprised in a camera group disposed with dual cameras, triple cameras, or more. In addition, the disposition of the first to third camera devices is not limited to the illustrated embodiments, and may be disposed in various ways by changing the order.

Hereinafter, an optical device according to a first embodiment of the present disclosure will be described with reference to the drawings.

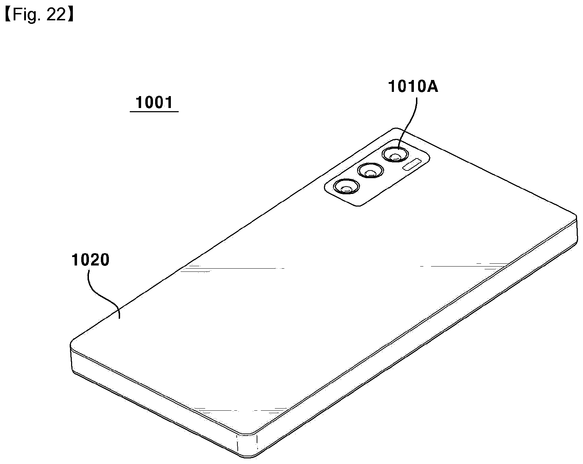

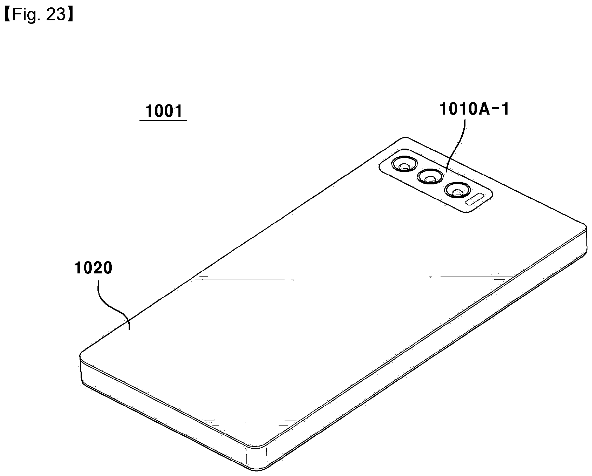

FIG. 22 is a perspective view illustrating an optical device according to the first embodiment of the present disclosure, and FIG. 23 is a perspective view illustrating an optical device according to a modified example.

The optical device 1001 may comprise at least one of a mobile phone, a cellular phone, a portable terminal, a mobile terminal, a smart phone, a smart pad, a portable smart device, a digital camera, a laptop computer, a digital broadcasting terminal, a PDA (Personal Digital Assistants), a PMP (Portable Multimedia Player), and a navigation device. The optical device 1001 may comprise any device for capturing images or pictures.

The optical device 1001 may comprise a main body 1020. The optical device 1001 may comprise a camera device 1010A. The camera device 1010A may be disposed in the main body 1020. The camera device 1010A may capture a subject. The optical device 1001 may comprise a display. The display may be disposed in the main body 1020. The display may output one or more of an image and a video captured by the camera device 1010A. The display may be disposed on a first surface of the main body 1020. The camera device 1010A may be placed on one or more of the first surface of the main body 1020 and the second surface opposite the first surface. As illustrated in FIG. 22, the camera device 1010A may have a triple camera positioned in a vertical direction. As illustrated in FIG. 23, the camera device 1010A-1 may have triple cameras disposed in a horizontal direction.

For convenience of explanation, the lens driving device according to the embodiment is described using the Cartesian coordinate system (x, y, z), but may be described using another coordinate system, and the embodiment is not limited thereto. In each drawing, the x-axis and the y-axis mean a direction perpendicular to the z-axis, which is the optical axis direction, and the z-axis direction, which is the optical axis or a direction parallel to the optical axis, may be referred to as the 'first direction', the x-axis direction may be referred to as the 'second direction', and the y-axis direction may be referred to as the 'third direction'.

In addition, for example, the optical axis may be the optical axis of a lens mounted on a lens barrel coupled with the bobbin. Or, for example, the optical axis may be an axis that is perpendicular to the imaging area of the image sensor and passes through the center of the imaging area. The first direction may be a direction perpendicular to the imaging area of the image sensor. In addition, for example, the optical axis direction may be a direction parallel to the optical axis.

'Auto focusing' refers to automatically focusing an image of a subject on an image sensor surface. A lens driving device according to an embodiment can perform an auto focusing operation of moving an optical module composed of at least one lens in a first direction.

Additionally, in the following description, "terminal" may be replaced with a pad, an electrode, a conductive layer, or a bonding part.

Hereinafter, the lens driving device may be expressed as a "voice coil motor," "lens moving device," "lens moving part," or "actuator."

The camera device below may be alternatively referred to as "camera module", "camera assembly", "camera part", "camera", "imaging device", or "lens moving device".

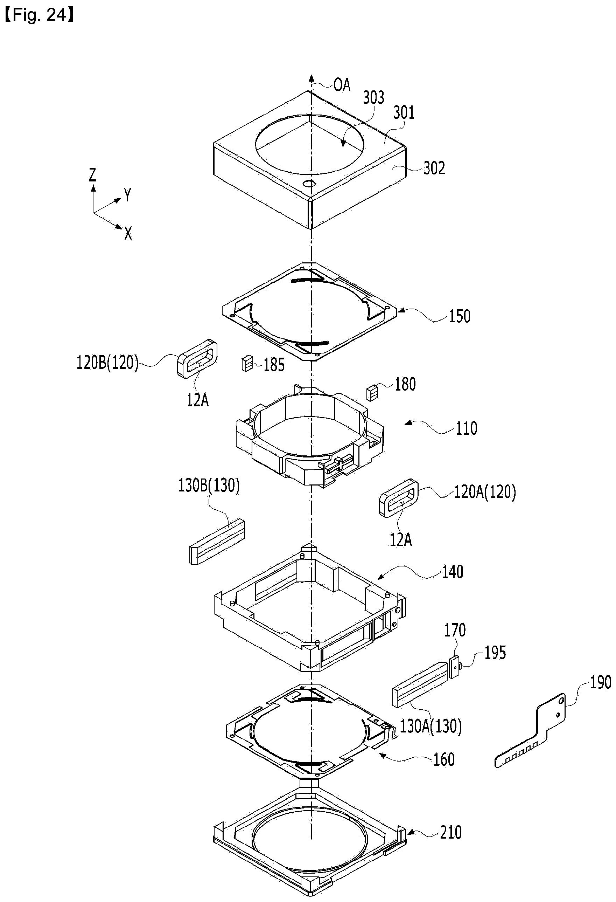

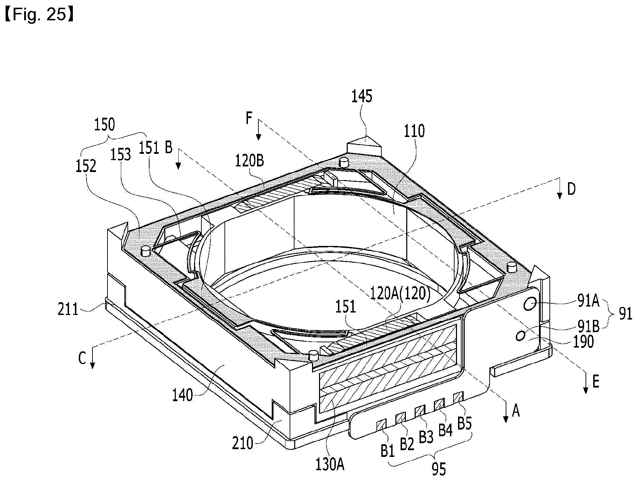

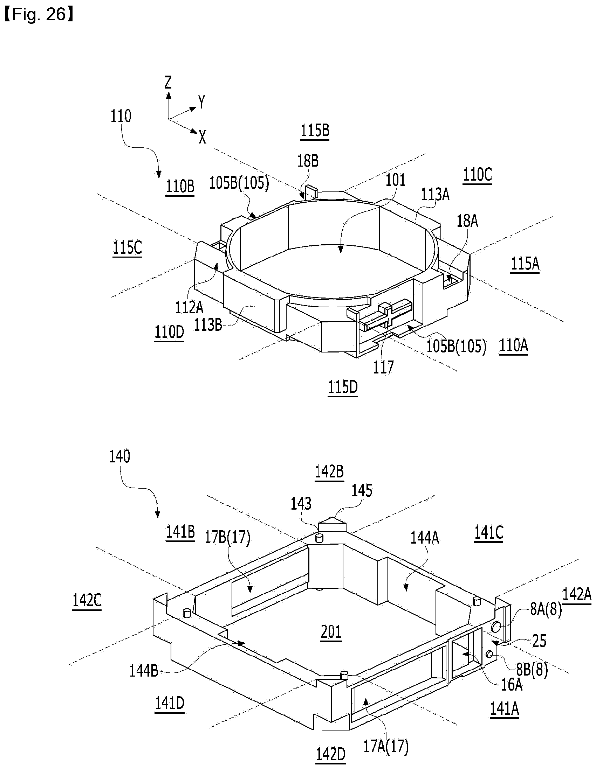

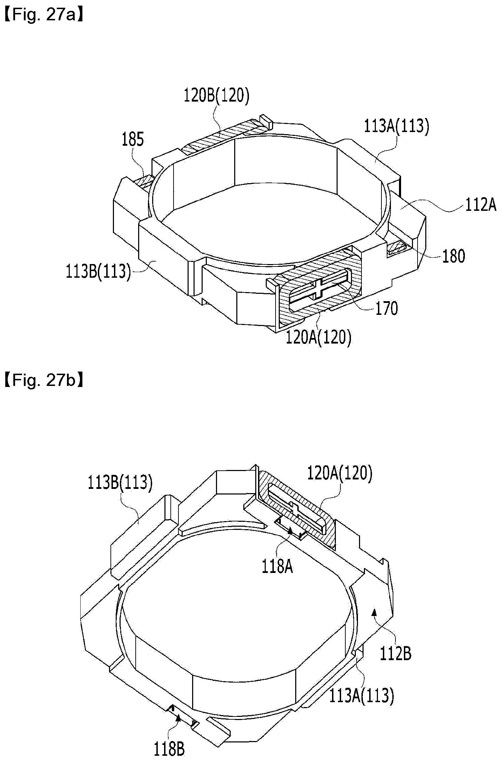

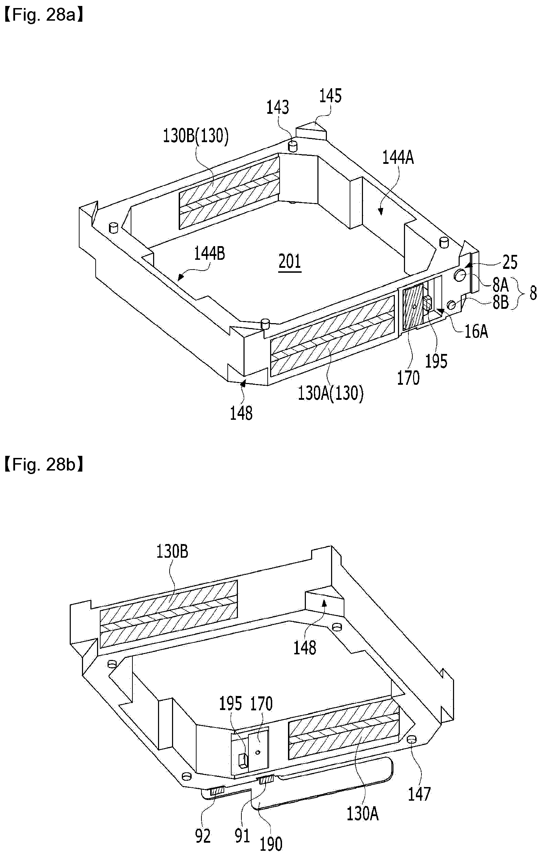

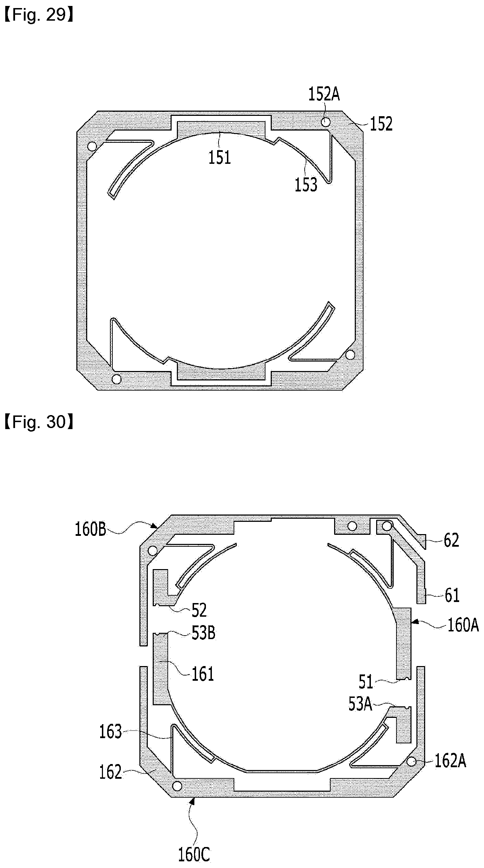

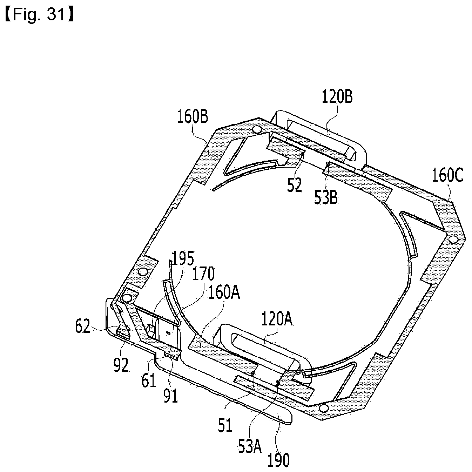

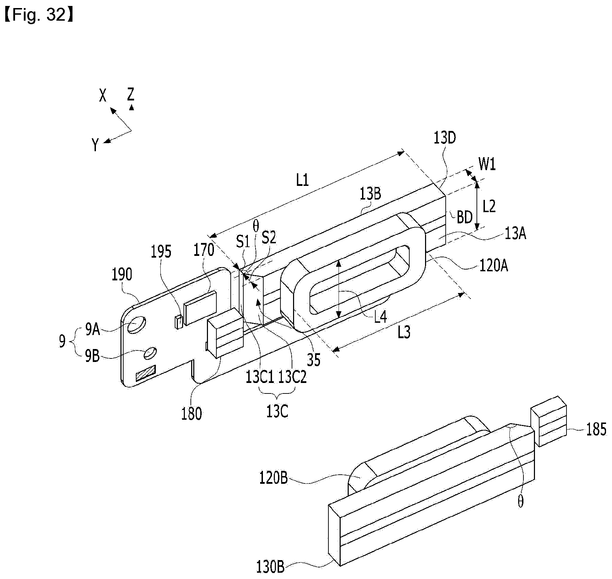

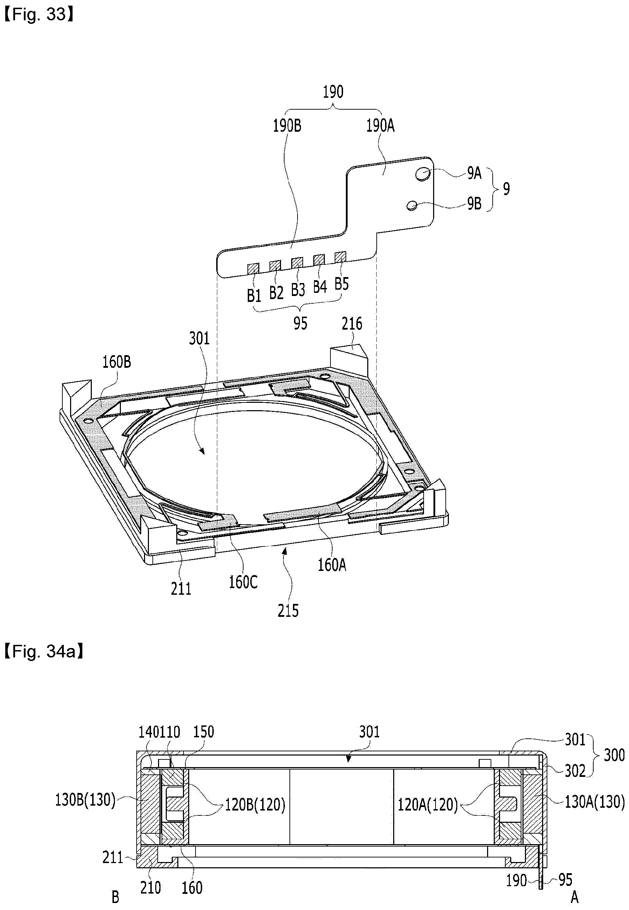

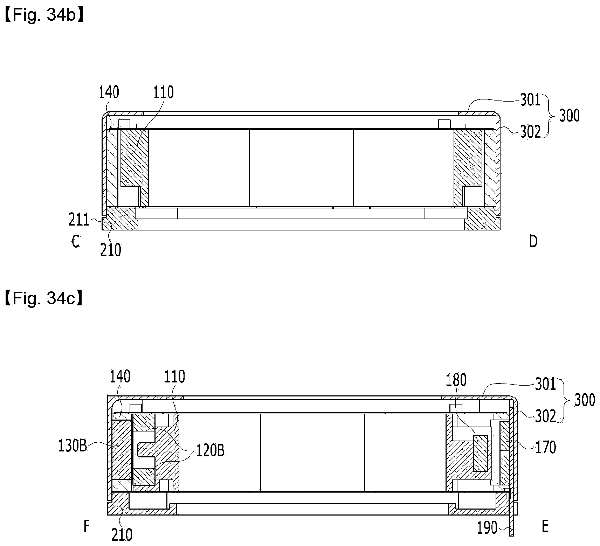

FIG. 24 is an exploded perspective view illustrating a lens driving device 100 according to a second embodiment of the present disclosure, FIG. 25 is a perspective view illustrating the lens driving device 100 excluding the cover member 300 of FIG. 24, FIG. 26 is an exploded perspective view illustrating a bobbin and a housing, FIG. 27a is a first perspective view illustrating a bobbin 110, a coil 120, a sensing magnet 180, and a balancing magnet 185, FIG. 27b is a second perspective view illustrating the bobbin 110, the coil 120, the sensing magnet 180, and the balancing magnet 185, FIG. 28a is a first perspective view illustrating a housing 140, a magnet 130, a position sensor 170, and a capacitor 195, and FIG. 28b is a first perspective view illustrating a housing 140, a magnet 130, a position sensor 170, and a capacitor 195, FIG. 29 is a plan view illustrating the upper elastic member 150, FIG. 30 is a plan view illustrating the lower elastic member 160, FIG. 31 is a combination view of the lower elastic member 160, the first coil part 120A, the second coil part 120B, and the circuit board 190, FIG. 32 is a perspective view illustrating the circuit board 190, the position sensor 170, the capacitor 195, the magnet 130, and the coil 120, FIG. 33 is a perspective view illustrating the circuit board 190, the lower elastic member 160, and the base 210, FIG. 34a is a cross-sectional view illustrating the lens driving device 100 in the AB direction of FIG. 2, FIG. 34b is a cross-sectional view illustrating the lens driving device 100 in the CD direction of FIG. 2, and FIG. 34c is a cross-sectional view illustrating the lens driving device 100 in the EF direction of FIG. 2.

Referring to FIGS. 24 to 34c, the lens driving device 100 comprises a housing 140, a bobbin 110, a coil 120, a magnet 130, a sensing magnet 180, and a position sensor 170.

The lens driving device 100 may comprise an elastic member that supports the bobbin 110 with respect to the housing 140. The elastic member may comprise at least one of an upper elastic member 150 and a lower elastic member 160.

The lens driving device 100 may further comprise a circuit board 190 electrically connected to the position sensor. In addition, the lens driving device 100 may further comprise a balancing magnet 185. In addition, the lens driving device 100 may further comprise a capacitor 195. In addition, the lens driving device 100 may further comprise a cover member 300 and a base 210.

The bobbin 110 is placed inside the housing 140 and can be moved in the optical axis OA direction or the first direction (for example, the Z-axis direction) by the electromagnetic interaction between the coil 120 and the magnet 130.

A lens module 400 may be coupled or mounted on the bobbin 110. The lens module 400 may comprise at least one of a lens or a lens barrel. The bobbin 110 is disposed within the housing 140. The bobbin 110 may comprise an opening 101 to which the lens module 400 is coupled or mounted. For example, the opening 101 of the bobbin 110 may be a hollow or through-hole, and the shape thereof may be, but is not limited to, a circle, an oval, or a polygon.

The bobbin 110 may comprise a first coupling part that is disposed on the upper part, upper surface, or upper end and is coupled and fixed to an upper elastic member 150 (for example, a first inner frame 151). The bobbin 110 may comprise a second coupling part that is disposed on the lower part, lower surface, or lower end and is coupled and fixed to a lower elastic member 160 (for example, a second inner frame 161).

For example, the first and second coupling parts of the bobbin 110 are planar, but in other embodiments they may be protruding or grooved.

The bobbin 110 may comprise a first escape groove 112a provided in an area of the upper surface corresponding to, opposite to, or overlapping with the first frame connection part 153 of the upper elastic member 150 in the optical axis direction. For example, the first escape groove 112a may be in a recessed shape from the upper surface of the bobbin 110. In addition, the bobbin 110 may comprise a second escape groove 112b in an area of the lower surface corresponding to, opposite to, or overlapping with the second frame connection part 163 of the lower elastic member 160 in the optical axis direction. For example, the second escape groove 112b may be in a recessed shape from the lower surface of the bobbin 110.

When the bobbin 110 moves in the first direction by the first escape groove 112a and the second escape groove 112b of the bobbin 110, spatial interference between the first frame connection part 153 and the second frame connection part 163 and the bobbin 110 can be eliminated, and as a result, the first frame connection part 153 and the second frame connection part 163 can be easily elastically deformed.

The bobbin 110 may comprise a plurality of side surfaces or outer surfaces. The bobbin 110 may comprise side parts and corner parts. For example, the bobbin 110 may comprise first to fourth side parts 110A to 110D and first to fourth corner parts 115A to 115D.

For example, the first side part 110A and the second side part 110B of the bobbin 110 may be positioned facing or opposite to each other with the optical axis interposed therebetween, and the third side part 110C and the fourth side part 110D of the bobbin 110 may be positioned facing or opposite to each other with the optical axis OA interposed therebetween.

For example, the first side part 110A and the second side part 110B of the bobbin 110 may be positioned facing or opposite to each other in a second direction (for example, in the X-axis direction), and the third side part 110C and the fourth side part 110D of the bobbin 110 may be positioned facing or opposite to each other in a third direction (for example, in the Y-axis direction).

For example, each of the first to fourth corner parts 115A to 115D may be disposed between two adjacent side parts of the bobbin 110. The side or outer surfaces of the first to fourth side parts 110A to 110D of the bobbin 110 may also be expressed as "first to fourth side surfaces" or "first to fourth outer surfaces" of the bobbin 110.

The bobbin 110 may comprise at least one seating part 105 for disposing or seating a coil 120. The seating part 105 may be a groove that is recessed from an outer surface of the bobbin 110. For example, the bobbin 110 may comprise a first seating part 105A for disposing or seating a first coil part 120A and a second seating part 105B for disposing or seating a second coil part 120A.

For example, the first seating part 105A may be disposed on the first side part 110A of the bobbin 110, and the second seating part 105B may be positioned on the second side part 110B of the bobbin 110. For example, the first seating part 105A may be positioned close to one (for example, 115D) of two corner parts (for example, 115B, 115D) of the bobbin 110 that are positioned facing or opposite to each other with the optical axis interposed therebetween, and the second seating part 105B may be positioned close to the other (for example, 115B) of the two corner parts (for example, 115B, 115D) of the bobbin 110 that are positioned facing or opposite to each other with the optical axis interposed therebetween.

The bobbin 110 may comprise a projection 117 for engaging with the hollow 12A of the coil 120. The projection 117 may be positioned within the seating part 105. For example, the projection 117 may protrude from the bottom surface of the seating part 105. For example, the projection 117 may protrude in a direction perpendicular to the optical axis.

For example, the bobbin 110 may comprise protrusions 117 disposed on two side parts facing or opposite to each other. For example, the bobbin 110 may comprise two protrusions 117, each of which may be inserted into or coupled with a hollow 12A of a corresponding one of the first and second coil parts 120A, 120B. The protrusion 117 may have a cylinder, a polyhedron, or a cross shape, and may have various shapes that may be coupled with the hollow of the coil part. In other embodiments, the protrusion 117 may be omitted. For example, the number of protrusions disposed on one side of the bobbin 110 and coupled with the hollow of one coil part may be one or more.

In another embodiment, the coil 120 may be wrapped around the outer surface of the bobbin 110 clockwise or counterclockwise with respect to the optical axis.

In another embodiment, the bobbin 110 may be secured to the outer surface of the bobbin 110 without a seating part for disposing the coil 120.

In addition, in order to dispose or seat the sensing magnet 180, the bobbin 110 may comprise a groove 18A provided on the first side part 110A of the bobbin 110. For example, the groove 18A may comprise an opening that opens to the upper surface of the bobbin 110 to facilitate the mounting of the sensing magnet.

In addition, in order to dispose or seat the balancing magnet 185, the bobbin 110 may comprise a groove 19B provided on the second side part 110B of the bobbin 110.

Although not illustrated in FIG. 26, the bobbin 110 may comprise a first stopper protruding upward from the upper surface. In addition, the bobbin 110 may comprise a second stopper protruding downward from the lower surface. The first stopper and the second stopper of the bobbin 110 may prevent the upper surface or the lower surface of the bobbin 110 from directly colliding with the inner wall of the cover member 300 or the upper surface of the base 210 even if the bobbin 110 moves beyond a specified range due to an external impact or the like when the bobbin 110 moves in the first direction for auto-focusing.

In another embodiment, the cover member 300 may comprise a boss that protrudes from the upper plate 301 toward the bobbin 110 and corresponds to, faces, or overlaps the first escape part 112a of the bobbin 110 in the optical axis direction, and the boss of the cover member 300 may serve as a stopper.

The bobbin 110 may comprise a boss 113A, 113B that protrudes in a direction perpendicular to the optical axis. For example, the boss 110 may protrude from an outer surface of the bobbin 110. For example, the bobbin 110 may comprise a boss 113A, 113B that protrudes from an outer surface of at least one of a third side part 110C and a fourth side part 110D of the bobbin 110. The boss 113A, 113B may be disposed within a groove 144 of the housing 140 and may prevent the bobbin 110 from rotating or tilting beyond a preset range. In addition, in an embodiment in which a step is formed in the groove part 144 of the housing 140 to correspond to, face, or overlap with the boss 113A, 113B, the boss 113A, 113B of the bobbin 110 and the step of the housing 140 may act as a stopper to prevent the bobbin 110 from moving downward beyond a preset range.

Referring to FIG. 27b, the bobbin 110 may comprise openings 118A, 118B that open to the lower surface of the bobbin 110 and through which one end and the other end part of the coil part 120A, 120B pass. For example, the bobbin 110 may comprise a first opening 118A through which one end and the other end part of the first coil part 120A pass and a second opening 118B through which one end and the other end part of the second coil part 120B pass. For example, the first opening 118A may be in communication with the first seating part 105A, and the second opening 118B may be in communication with the second seating part 105B.

The coil 120 may be placed, coupled, or fixed to the bobbin 110. For example, the coil 120 may be placed on an outer surface of the bobbin 110. The coil 120 may be a driving coil that electromagnetically interacts with the magnet 130. The coil 120 may be placed within the seating part 105 of the bobbin 110 or coupled with the seating part 105.

A driving signal (for example, a driving current or voltage) may be applied to the coil 120 to generate an electromagnetic force by interaction with the magnet 130. For example, the driving signal applied to the coil 120 may be a direct current signal, but is not limited thereto, and may be an alternating current signal or may comprise a direct current signal and an alternating current signal.

The AF movable part can be moved in the first direction by the electromagnetic force resulting from the interaction between the coil 120 and the magnet 130.

By controlling the intensity and/or polarity (for example, direction of current flow) of a driving signal applied to the coil 120, thereby adjusting the intensity and/or direction of the electromagnetic force resulting from the interaction between the coil 120 and the magnet 130, the movement of the AF movable part in the first direction can be controlled, thereby performing an auto-focusing function.

The AF movable part can be unidirectionally driven or bidirectionally driven by the electromagnetic force resulting from the interaction between the coil 120 and the magnet 130. Here, unidirectional driving means that the AF movable part moves unidirectionally, for example, in an upward direction (for example, in an upward direction (+Z-axis direction)) based on the initial position of the AF movable part. Bidirectional driving means that the AF movable part moves in both directions (for example, in an upward direction or a downward direction) based on the initial position of the AF movable part.

For example, the initial position of the bobbin 110 may be the initial position of the AF movable part (for example, the bobbin) in a state where no power or driving signal is applied to the coil 120. Alternatively, the initial position of the bobbin 110 may be the position at which the AF movable part is placed when the upper elastic member 150 and the lower elastic member 160 are elastically deformed only by the weight of the AF movable part.

In addition, the initial position of the bobbin 110 may be the position where the AF movable part is placed when gravity acts from the bobbin 110 toward the base 210, or conversely, when gravity acts from the base 210 toward the bobbin 110.

The AF movable part may comprise a bobbin 110 and components coupled with the bobbin 110 or mounted on the bobbin 110 and moving together with the bobbin 110. For example, the AF movable part may comprise at least one of the bobbin 110, the coil 120, the sensing magnet 180, and the balancing magnet 185. Alternatively, when the AF movable part is mounted with a lens module 400, the AF movable part may comprise the lens module 400.

The coil 120 may have a closed loop shape with a hollow, for example, a ring shape.

For example, the coil 120 may comprise a first coil part 120A and a second coil part 120B. For example, the first coil part 120A may be placed on a first side part 110A of the bobbin 110, and the second coil part 120B may be placed on a second side part 110B of the bobbin 110.

For example, the first coil part 120A may be placed on the first side or the first outer side of the bobbin 110, and the second coil part 120B may be placed on the second side or the second outer side of the bobbin 110 facing the first side of the bobbin 110.

The coil 120 may not be disposed on the third side part 110C (or the third side of the bobbin) and the fourth side part 110D (or the fourth side of the bobbin 110) of the bobbin 110. For example, in the direction from the third side part 110C of the bobbin 110 to the fourth side part 110D, the third side part 110C and the fourth side part 110D of the bobbin 110 may not overlap with the coil 120.

For example, the first coil part 120A may be a ring shape wound clockwise or counterclockwise with respect to an axis perpendicular to the outer surface of the first side part 110A of the bobbin 110 (or an axis perpendicular to the optical axis). In addition, the second coil part 120B may be a ring shape wound clockwise or counterclockwise with respect to an axis perpendicular to the outer surface of the second side part 110B of the bobbin 110 (or an axis perpendicular to the optical axis).

In another embodiment, each of the first coil part 120A and the second coil part 120B may be implemented in the form of a coil ring, and the first coil part 120A may be attached or fixed to the first side part 110A (or the seating part 105A) of the bobbin 110 by an adhesive member, and the second coil part 120B may be attached or fixed to the second side part 110B (or the seating part 105B) of the bobbin 110 by an adhesive member.

The coil 120 may be electrically connected to at least one of the upper elastic member 150 or the lower elastic member 160. The coil 120 may be electrically connected to the circuit board 190 through at least one of the upper elastic member 150 and the lower elastic member 160.

The first coil part 120A and the second coil part 120B can be connected in series with each other.

For example, the first coil part 120A and the second coil part 120B can be connected in series by at least one of the upper elastic member 150 or the lower elastic member 160.

For example, at the initial position of the bobbin 110, the coil 120 disposed on the bobbin 110 may face or overlap the magnet 130 in a direction passing through the optical axis and perpendicular to the optical axis (for example, the second direction, the X-axis direction).

In addition, for example, at least a part of the sensing magnets 180 disposed on the bobbin 110 at the initial position of the bobbin 110 may face or overlap the position sensor 170 in a direction passing through the optical axis and perpendicular to the optical axis (for example, the second direction, the X-axis direction). In another embodiment, at the initial position of the bobbin 110, the sensing magnets 180 may not overlap the position sensor 170 in a direction passing through the optical axis and perpendicular to the optical axis (for example, the second direction, the X-axis direction).

The sensing magnet 180 may be placed on the bobbin 110. For example, the sensing magnet 180 may be disposed on the first side part 110A of the bobbin 110. For example, the sensing magnet 180 may be placed within the groove 18A of the bobbin 110. For example, at least a part of the sensing magnet 180 may be exposed from the groove 18A. For example, a part of one side of the sensing magnet 180 may be exposed to the outer surface and/or the lower surface of the bobbin 110, but in other embodiments, it may not be exposed to the outer surface of the bobbin 110.

The sensing magnet 180 may be a bipolar magnetization magnet or a magnet comprising two N poles and two S poles. For example, the sensing magnet 180 may comprise a first magnet part comprising an N pole and a S pole, a second magnet part comprising an S pole and an N pole, and a non-magnetic partition wall located between the first magnet part and the second magnet part. The description of the bipolar magnetization magnet of the magnet 130 described below may be applied to or used in conjunction with the sensing magnet 180.

In another embodiment, the sensing magnet 180 may be an unipolar magnetization magnet having one N pole and one S pole. For example, the sensing magnet 180 may be an unipolar magnetization magnet having the upper surface as the N pole and the lower surface as the S pole. In another embodiment, the sensing magnet 180 may be an unipolar magnetization magnet having the upper surface as the S pole and the lower surface as the N pole.

Alternatively, for example, the sensing magnet 180 may be disposed such that the boundary surface of the N pole and the S pole is parallel to the direction perpendicular to the optical axis, but is not limited thereto. For example, in another embodiment, the boundary surface of the N pole and the S pole may be parallel to the optical axis.

The sensing magnet 180 can be moved in the optical axis direction OA together with the bobbin 110 by the electromagnetic force resulting from the interaction between the coil 120 and the magnet 130, and the position sensor 170 can detect the sensing magnet 180 moving in the optical axis direction or detect the intensity of the magnetic field of the sensing magnet 180 and output an output signal according to the detected result. For example, the control part 830 of the camera device 200 or the control part 780 of the terminal 200A can detect the displacement of the bobbin 110 in the optical axis direction based on the output signal output by the position sensor 170.

The balancing magnet 185 may be disposed on the bobbin 110. The balancing magnet 185 may be placed on the second side part 110B of the bobbin 110. For example, the sensing magnet 180 and the first coil part 120A may be placed on the first side part 110A of the bobbin 110. In addition, the balancing magnet 185 and the second coil part 120B may be placed on the second side part 110B of the bobbin 110.

The balancing magnet 185 can offset the magnetic influence of the sensing magnet 180 on the coil 120 and/or the magnet 130, and can balance the weight of the AF movable part, thereby enabling the embodiment to perform more accurate AF driving. For example, the magnet 130 can be expressed by replacing any one of the first to third magnets, the sensing magnet 180 can be expressed by replacing another one of the first to third magnets, and the balancing magnet 185 can be expressed by replacing the remaining other one of the first to third magnets.

The housing 140 accommodates an AF movable part, such as a bobbin 110, inside.

The housing 140 can support the magnet 130. The housing 140 may be a columnar shape comprising an opening 201 for accommodating a bobbin 110. For example, the housing 140 can comprise a plurality of side parts 141A to 141D and a plurality of corner parts 142A to 142D surrounding the opening 201.

For example, the opening 210 may be a through-hole or hollow that penetrates the housing 140 in the optical axis direction. For example, the opening 210 may be polygonal (for example, square or octagonal) or circular, but in other embodiments may have various shapes suitable for accommodating the bobbin 110.

For example, the housing 140 may comprise first to fourth side parts 141A to 141D that correspond to, oppose, or overlap the first to fourth side parts 110A to 110D of the bobbin 110. In addition, for example, the housing 140 may comprise first to fourth corner parts 142A to 142D that correspond to, oppose, or overlap the first to fourth corner parts 115A to 115D of the bobbin 110.

For example, the housing 140 may comprise first to fourth side parts 141A to 141D that are spaced apart from each other, a first corner part 142A positioned between the first side part 141A and the third side part 141C, a second corner part 142B positioned between the second side part 141B and the third side part 141C, a third corner part 142C positioned between the second side part 141B and the fourth side part 141D, and a fourth corner part 142D positioned between the fourth side part 141D and the first side part 141A. For example, the third side part 141C and the fourth side part 141D of the housing 140 may be positioned between the first side part 141B and the second side part 141B of the housing 140.

The housing 140 may comprise a first side surface (or first outer surface) corresponding to the first side surface (or first outer surface) of the bobbin 110, a second side surface (or second outer surface) corresponding to the second surface (or second outer surface) of the bobbin 110, a third surface (or third outer surface) corresponding to the third side surface (or third outer surface) of the bobbin 110, and a fourth side surface (or fourth outer surface) corresponding to the fourth surface (or fourth outer surface) of the bobbin 110. The third and fourth surfaces (or the third and fourth outer surfaces) of the housing 140 may be disposed between the first and second side surfaces (or the first and second outer surfaces) of the housing 140.

For example, each of the first to fourth side surfaces (or the first to fourth outer surfaces) of the housing 140 may be a corresponding side surface or outer surface of any one of the first to fourth side parts 141A to 141D of the housing 140.

For example, each of the first to fourth side parts 141A to 141D of the housing 140 may correspond to, face, or overlap one of the four side plates of the cover member 300. The corresponding side parts of the housing and the side plates of the cover member 300 may be disposed parallel to each other.

In order to dispose or seat the magnet 130, the housing 140 may comprise a seating part 17A. For example, the housing 140 may comprise a first seating part 17A for disposing, mounting, or coupling a first magnet part 130A and a second seating part 17B for disposing, seating, or coupling a second magnet part 130B.

For example, the first fixing part 17A may be disposed or provided on the first side part 141A of the housing 140, and the second fixing part 17B may be disposed or provided on the second side part 141B of the housing 140.

For example, the seating part 17 may be in the form of an opening or a through-hole penetrating a side part (for example, 141A, 141B) of the housing 140. In another embodiment, the seating part 17 may be in the form of a groove or a recess. In another embodiment, the seating part of the housing may be in a flat shape rather than a groove shape.

For example, the magnet 130 may be coupled or fixed to the seating part 17 of the housing 140 by an adhesive.

In order to prevent direct collision with the inner surface of the upper plate of the cover member 300, the housing 140 may comprise a stopper 145 disposed or provided on the upper part, upper surface or upper end. Here, the stopper 145 may be expressed as a "boss" or a "protrusion".

For example, the stopper 145 may be disposed on the upper surface of at least one of the first to fourth corner parts 142A to 142B of the housing 140. In another embodiment, the stopper 145 may be placed on at least one of the side parts 141A to 141D or the corner parts 142A to 142D of the housing 140.

For example, the stopper 145 of the housing 140 may contact the inner surface of the upper plate of the cover member 300. In other embodiments, the stopper of the housing and the inner surface of the upper plate of the cover may not contact each other.

The housing 140 may comprise at least one first coupling part 143 provided on the upper part, upper surface, or upper end of the housing 140 for coupling with an upper elastic member 150 (for example, a hole 152a of the first outer frame 152). In FIG. 26, the first coupling part 143 of the housing 140 may have a protrusion shape, but in other embodiments, the first coupling part of the housing 140 may have a groove or flat shape.

Additionally, the housing 140 may comprise at least one second coupling part 147 provided on the lower part, lower surface, or lower end of the housing 140 for coupling with a lower elastic member 160 (for example, a hole 162a of the second outer frame 162). In FIG. 28b, the second coupling part 147 is in a protrusion shape, but in other embodiments, the second coupling part of the housing 140 may be in a groove or flat shape.

In order to prevent the lower surface or bottom of the housing 140 from colliding with the base 210 described later, the housing 140 may be provided with at least one stopper (not illustrated) protruding from the lower part, lower surface, or lower end.

The housing 140 may comprise a groove 148 or guide groove corresponding to, opposing, or overlapping the boss 216 of the base 210. For example, the groove 148 may be provided on the lower part, the lower surface, or the lower end of at least one of the first to fourth corner parts 142A to 142D of the housing 140.

The housing 140 can be coupled with the base 210. For example, the lower part, the lower surface, or the lower end of the housing 140 can be coupled with the base 210. For example, the lower part, the lower surface, or the lower end of the housing 140 can be coupled with the boss 216 of the base 210. For example, the groove 148 of the housing 140 and the boss 216 of the base 210 can be coupled by an adhesive member.

The housing 140 may comprise a seating part 16A for disposing, seating, or accommodating the position sensor 170 and the capacitor 195. For example, the seating part 16A may be provided on a first side part 141A of the housing 140. For example, the seating part 16A may be located between the seating part 17A and a corner 142A of the housing 140.

For example, the seating part 16A is in the form of an opening or a through-hole penetrating the first side part 141A of the housing 140, but in another embodiment, the seating part 16A may be in the form of a groove. For example, the seating part 16A may have a shape corresponding to or matching the position sensor 190.

In the embodiment of FIG. 26, the seating part 16A accommodates the position sensor 170 and the capacitor 195 together, but in other embodiments, the housing 140 may comprise separate seating parts for accommodating each of the position sensor 170 and the capacitor 195.

The housing 140 may comprise a groove 25 for disposing, seating, or accommodating a circuit board 190. For example, the groove 25 may be provided on an outer surface of the first side part 141A of the housing 140. For example, the groove 25 may be in a recessed shape from the outer surface of the first side part 141A of the housing 140.

The housing 140 may comprise a structure for being coupled with a circuit board 190 on the first side part 141A. For example, the housing 140 may comprise at least one protrusion 8 protruding from an outer surface of the first side part 141A. For example, the housing 140 comprises two protrusions 8A, 8B, but in other embodiments, the number of protrusions may be three or more. The protrusion 8 may be coupled with at least one hole 9 (or groove) formed in the circuit board 190. The circuit board 190 comprises two holes 9A, 9B, but in other embodiments, the number of holes may be three or more.

For example, the circuit board 190 may be attached or fixed to the first side part 141A of the housing 140 by an adhesive or the like, and may comprise a structure that is coupled with the housing 140. For example, the structure in which the housing 140 and the circuit board 190 are coupled to each other may be such that when one side is a protrusion, the other side is a hole or a groove.

The magnet 130 can generate electromagnetic force by interaction with the coil 120 and can be a driving magnet that can move the bobbin 110 by this electromagnetic force.

The magnet 130 can be disposed, coupled, or fixed to the housing 140.

The magnet 130 may comprise two magnet parts 130A, 130B disposed on two side parts of a housing 140 located opposite each other with the optical axis in between.

The magnet 130 may comprise a first magnet part 130A disposed on a first side part 141A of the housing 140 and a second magnet 130B disposed on a second side part 141B. For example, the magnet 130 may not be disposed on the third side part 141C and the fourth side part 141D of the housing 140.

For example, the first magnet part 130A may be disposed on the first side surface or the first outer surface of the housing 140, and the second magnet part 130B may be disposed on the second side surface or the second outer surface of the housing 140.

For example, the first magnet part 130A may be disposed within the first seating part 17A of the housing 140, and the second magnet part 130B may be disposed within the second seating part 17B of the housing 140.

In another embodiment, the side parts 141A, 141B of the housing 140 may not have the seating parts 17A, 17B formed, and the first and second magnet parts 130A, 130B may be disposed on the outer surface or the inner surface of the first and second side parts 141A, 141B of the housing 140.

The first magnet part 130A may be positioned closer to one 142D of the two corners 142A, 142D adjacent to the first side part 141A of the housing 140. For example, the first magnet part 130A may be positioned closer to the fourth corner 142D of the housing 140 than to the first corner 142A of the housing. This is to secure a space for disposing the position sensor 170 and the capacitor 195 on the first side part 141A of the housing 140.

The second magnet part 130B may be positioned closer to one 142B of the two corners 142B, 142C adjacent to the second side part 141B of the housing 140. For example, the second magnet part 130B may be positioned closer to the second corner 142B than to the third corner 142C of the housing 140. This is to dispose the second magnet part 130B and the first magnet part 130A symmetrically with respect to the optical axis, and to prevent unintended tilt of the bobbin 110 during AF operation, thereby ensuring reliability of the AF operation of the bobbin 110.

For example, the fourth corner 142D of the housing 140 where the first magnet part 130A is positioned close and the second corner 142B of the housing 140 where the second magnet part 130B is positioned close may face each other or be positioned on opposite sides with the optical axis between them.

Each of the first and second magnet parts 130A, 130B may have an overall polyhedral shape, for example, a rectangular parallelepiped, but in other embodiments may have various shapes suitable for generating electromagnetic force by interaction with the coil 120.

Each of the first and second magnet parts 130A, 130B may be a bipolar magnetization magnet or a quadrupolar magnet comprising two N poles and two S poles. For example, each of the first and second magnet parts 130A, 130B may comprise a first magnet part comprising an N pole and a S pole, a second magnet part comprising an S pole and an N pole, and a partition wall disposed between the first magnet part and the second magnet part.

For example, each of the first and second magnet parts 130A, 130B may be implemented using a ferrite, alnico, rare earth magnet, or the like

For example, the first magnet part and the second magnet part may be positioned facing each other or on opposite sides in the optical axis direction with a partition wall therebetween. For example, the first magnet part and the second magnet part may be positioned so that their polarities face each other in the optical axis direction. For example, the N pole of the first magnet part and the S pole of the second magnet part may be positioned so as to face the coil 120, but in another embodiment, the S pole of the first magnet part and the N pole of the second magnet part may be positioned so as to face the coil 120.

In other embodiments, the first magnet part and the second magnet part may be positioned facing each other or on opposite sides in a direction perpendicular to the optical axis with a partition wall therebetween.

For example, the first magnet part may comprise a N pole, a S pole, and a first boundary surface between the N pole and the S pole. In this case, the first boundary surface may comprise a substantially non-magnetic part and a section with little polarity, and may be a naturally occurring part to form a magnet composed of one N pole and one S pole.

For example, the second magnet part may comprise a N pole, a S pole, and a second boundary surface between the N pole and the S pole. In this case, the second boundary surface may comprise a substantially non-magnetic part, a section with little polarity, and may be a naturally occurring part to form a magnet composed of one N pole and one S pole.

The partition wall separates or isolates the first magnetic part and the second magnetic part, and may be a substantially non-magnetic part, with little polarity. For example, the baffle may be a non-magnetic material, or air, or the like The baffle may be expressed as a "neutral zone" or a "middle area".

The partition wall is a part artificially formed when the first magnet part and the second magnet part are magnetized, and the width of the partition wall may be greater than the widths of each of the first boundary surface and the second boundary surface. Here, the width of the partition wall may be the length of the non-magnetic partition wall in the direction from the first magnet part to the second magnet part.

In the embodiment, the magnet 130 comprises four magnets, but is not limited thereto. In another embodiment, the number of magnets 130 may be at least two or more, and the first surface of the magnet 130 may be formed as a plane, but is not limited thereto, and the first surface 13a of the magnet 130 may comprise a curved surface, an inclined surface, or a tapered part. For example, the first surface 13a of the magnet 130 may be an outer surface of the bobbin 110-1 or/and a surface facing the coil 120.

In another embodiment, each of the first and second magnet parts 130A, 130B may be an unipolar magnetization magnet having two different polarities and a boundary surface naturally formed between the different polarities. For example, each of the first and second magnet parts 130A, 130B may be an unipolar magnetization magnet having a first surface facing the coil 120 as an N pole and a second surface opposite the first surface as an S pole, but is not limited thereto, and the N pole and the S pole may be opposite.

Referring to FIG. 32, a tapered surface or inclined surface 35 may be provided at one end part of the first magnet part 130A. For example, the tapered surface or inclined surface 35 may be in the form of a chamfered shape at one edge of one end part of the first magnet part 130B. For example, the tapered surface or inclined surface 35 may be formed at one end part of the first magnet part 130A adjacent to the position sensor 170. In addition, the tapered surface or inclined surface 35 may be formed at an edge of one end part of the first magnet part 130A adjacent to the sensing magnet 180.

The reason for forming the tapered surface or inclined surface 35 on the first magnet part 130A is to reduce magnetic interference between the sensing magnet 180 and the first magnet part 130A. In other words, by forming the tapered surface or inclined surface 35, the separation distance between the first magnet part 130A and the sensing magnet 180 can be increased, thereby reducing magnetic interference between the sensing magnet 180 and the first magnet part 130A.

By reducing the influence of the magnetic field of the sensing magnet 180 on the first magnet part 130A, the embodiment can suppress the influence of the electromagnetic force due to the interaction between the first coil part 120A and the first magnet part 130A caused by the magnetic field of the sensing magnet 180, and accurate AF driving can be performed and the reliability of the AF driving can be improved.

In addition, by reducing the influence of the magnetic field of the first magnet part 130A on the sensing magnet 180, the embodiment can reduce the influence of the output of the position sensor 170 caused by the magnetic field of the first magnet part 130A, and accurate AF feedback driving can be performed and the reliability of AF driving can be further improved.

For example, the first magnet part 130A may comprise a first surface 13A facing the bobbin 110 (or the first coil part 120A), a second surface 13B positioned opposite the first surface 13A, a third surface 13C positioned between the first surface 13A and the second surface 13B and adjacent to the position sensor 170, and a fourth side surface 14D positioned opposite the third surface 13C. In addition, the first magnet part 130A may further comprise an upper surface in contact with the upper ends or the upper sides of the first to fourth side surfaces 13A to 13D and a lower surface in contact with the lower ends or lower sides of the first to fourth side surfaces 13A to 13D.

For example, the third surface 13C may comprise a first surface 13C1 in contact with the second surface 13B and a second surface 13C2 positioned between the first surface 13A and the first surface 13C1.

For example, the first surface 13A and the second surface 13B of the first magnet part 130A may be parallel to each other. For example, the first surface 13C1 of the third surface 13C and the fourth surface 13D of the first magnet part 130B may be parallel to each other. For example, the internal angle θ between the first surface 13C1 and the second surface 13C2 may be an obtuse angle. For example, the internal angle θ may be 120 degrees to 160 degrees.

For example, the first magnet part 130A may comprise a first region S1 comprising a second surface 13B and a second region S2 comprising the first surface 13A. The length of the second region S2 in the third direction (Y-axis direction) may decrease as it progresses from the second surface 13B toward the first surface 13A.

For example, the length L1 of the first magnet part 130A in the third direction (Y-axis direction) may be greater than the length L2 of the first magnet part 130A in the first direction (Z-axis direction). In other embodiments, L1 and L2 may be the same.

In addition, the length L1 of the first magnet part 130A in the third direction (Y-axis direction) may be greater than the length W1 of the first magnet part 130A in the second direction (X-axis direction).

For example, the length L3 of the first coil part 120A in the third direction may be smaller than the length L1 of the first magnet part 130A in the third direction (Y-axis direction). In other embodiments, L3 may be equal to L1.

For example, the length L4 of the first coil part 120A in the first direction may be greater than the length L2 of the first magnet part 130A in the first direction (Z-axis direction). In other embodiments, L4 may be less than or equal to L2.

The description of the first magnet part 130A and the description of the relationship between the first magnet part and the first coil part 120A can also be applied or analogically applied to the second magnet part 130B and the second coil part 120B.

For example, the second magnet part 120B may be disposed symmetrically with the first magnet part 120A. For example, the second magnet part 120B may be rotationally symmetrical with the first magnet part 120A by 180 degrees with respect to the optical axis. Additionally, the first coil part 120A and the second coil part 120B may be rotationally symmetrical with respect to the optical axis by 180 degrees.

For example, the inclined surface 35 of the first magnet part 130A in the direction from the first corner 142A of the housing 140 to the fourth corner 142D may overlap with the capacitor 195 and the position sensor 170.

For example, the position sensor 170 may be disposed between the inclined surface 35 of the first magnet part 130A and the capacitor 195. In another embodiment, the capacitor 195 may be disposed between the position sensor 170 and the inclined surface 35 of the first magnet part 130A. This can reduce the influence of the magnetic interference of the first magnet part 130A on the position sensor 170, thereby preventing malfunction of the position sensor 170 due to the magnetic interference.

The circuit board 190 and position sensor 170 can be placed in the housing 140.

The circuit board 190 and the position sensor 170 may be placed on the first side part (141A, or first side surface) of the housing 140 where the first magnet part 130A is placed. For example, the circuit board 190 may be placed within the groove 25 of the housing 140, and the position sensor 170 may be placed within the seating part 16A of the housing 140.

For example, the circuit board 190 may be placed on the outside of the first magnet 130A placed on the first side part 141A of the housing 140. Here, the outside of the first magnet 130A may be the opposite side of the center of the housing 140 with respect to the first magnet 130A.

The circuit board 190 may comprise terminals 91, 92 (or pads) for providing a driving signal to the coil 120 and terminals 95; B1 to B5 for electrically connecting to the outside.

For example, terminals 91, 92 of the circuit board 190 may be disposed on a first surface of the circuit board 190 to facilitate electrical connection with the upper elastic member 150 or the lower elastic member 160 and to shorten the electrical connection path. For example, the first surface of the circuit board 190 may be a surface facing the first side part 141A of the housing 140 or the bobbin 110.

In addition, for example, terminals 95 of the circuit board 190 may be disposed on the second surface of the circuit board 190 to facilitate electrical connection with the outer part. The second surface of the circuit board 190 may be a surface located opposite the first surface of the circuit board 190. For example, the terminals 95 of the circuit board 190 may be disposed in a row on the lower surface of the second surface of the circuit board 190.

In FIG. 33, the circuit board 190 comprises five terminals B1 to B5 for external electrical connection, but in other embodiments, the circuit board 190 may comprise four terminals or six or more terminals.

The circuit board 190 may comprise circuit patterns or wirings for electrically connecting the position sensor 170 and terminals 91, 92, 95 of the circuit board 190.

Additionally, the circuit board 190 may comprise at least one hole 9 for engaging with a protrusion 8 of the housing 140.

Referring to FIG. 2 and FIG. 33, the circuit board 190 may comprise a first part 190A (or body) disposed in the housing 140 and a second part 190B (or extension) connected to the first part 190B and extending to an outer surface of the base 210. The first part 190A of the circuit board 190 may be positioned on one side of the first magnet part 130A to avoid spatial interference with the first magnet part 130A, and the second part 190B may be positioned below the first magnet part 130A. For example, the hole 9 may be formed in the first part 190A of the circuit board 190. For example, the circuit board 190 may be a printed circuit board or a flexible printed circuit board (FPCB).

The position sensor 170 may be coupled to the circuit board 190 or mounted on the circuit board 190 by a conductive adhesive or solder. For example, the position sensor 170 may be mounted, coupled, or placed on the first surface of the circuit board 190.

The position sensor 170 can detect the position or displacement of the bobbin 110 in the first direction. For example, the position sensor 170 can detect the strength of the magnetic field of the sensing magnet 180 and output an output signal (for example, output voltage) according to the detected result.

For example, the position sensor 170 may be a driver IC comprising a Hall sensor.

For example, the position sensor 170 may comprise first and second terminals to which power or a power signal is input. In addition, the position sensor 170 may comprise third and fourth terminals for transmitting and receiving a clock signal and a data signal using data communication using a protocol, for example, I2C communication. The position sensor 170 and the control part 830, 780 may perform data communication using a protocol, for example, I2C communication.

Each of the first to fourth terminals of the position sensor 170 can be electrically connected to a corresponding one of the first to fourth terminals (for example, B1 to B4) of the circuit board 190.

Additionally, for example, the position sensor 170 may comprise fifth and sixth terminals for supplying a driving signal, for example, a driving current, to the coil 120. For example, the fifth and sixth terminals of the position sensor 170 may be electrically connected to a corresponding one of the fifth and sixth terminals 91, 92 of the circuit board 190.

The capacitor 195 may be coupled to the circuit board 190 or mounted on the circuit board 190 by a conductive adhesive or solder. For example, the capacitor 195 may be mounted, coupled, or placed on the first surface of the circuit board 190. For example, the capacitor 195 may be disposed on the seating part 16A of the housing 140.

The capacitor 195 may be in the form of a chip and may comprise a first terminal electrically connected to one end part of the capacitor 195 and a second terminal electrically connected to the other end part of the capacitor 195. The capacitor 195 may be expressed as a "capacitive element" or a condenser.

In another embodiment, the capacitor 195 may be formed integrally with the circuit board 190. For example, the circuit board 190 may comprise a capacitor comprising a first conductive layer, a second conductive layer, and an insulating layer (for example, a dielectric layer) disposed between the first conductive layer and the second conductive layer.

The capacitor 195 may be electrically connected in parallel to terminals (for example, B1, B2) of the circuit board 190 for providing power (or a driving signal) to the position sensor 170 from the outside.

Alternatively, the capacitor 195 may be electrically connected in parallel to the first and second terminals of the position sensor 170, which are electrically connected to terminals (for example, B1, B2) of the circuit board 190.

For example, one end part of the capacitor 195 (or the first terminal of the capacitor 195) may be electrically connected to one of the terminals (for example, B1, B2) of the circuit board 190, and the other end part of the capacitor 195 (or the second terminal of the capacitor 195) may be electrically connected to the other remaining one of the terminals (for example, B1, B2) of the circuit board 190.

The capacitor 195 can act as a smoothing circuit that removes a ripple component comprised in a power or driving signal (for example, current) supplied to the position sensor 170 from the outside by being electrically connected in parallel to the terminals (for example, B1, B2) of the circuit board 190, thereby providing a stable and constant power or driving signal (or current) to the position sensor 170. In addition, the capacitor 195 can also protect the position sensor 170 from noise of high-frequency components or ESD, or the like supplied from the outside.

In addition, the capacitor 195 can prevent overcurrent caused by noise of high-frequency components or ESD flowing in from the outside from being applied to the position sensor 170, and can prevent a phenomenon in which a calibration value for the displacement of the bobbin obtained based on the output signal of the position sensor 170 is reset due to overcurrent.

In another embodiment, the position sensor 170 may be implemented with only a Hall sensor. In an embodiment where the position sensor 170 is implemented with only a Hall sensor, the position sensor 170 may comprise two input terminals for providing a power or driving signal and two output terminals for outputting an output signal. In this case, the circuit board 190 may comprise first and second terminals (for example, B1, B2) electrically connected to the two input terminals of the position sensor 170 and third and fourth terminals (for example, B3, B4) electrically connected to the two output terminals of the position sensor 170. In addition, power or a driving signal for driving the position sensor 170 can be supplied from an external device (for example, a control part 830) to the first and second terminals (for example, B2, B2) of the circuit board 190, and an output signal of the position sensor 170 can be output to the third and fourth terminals (for example, B3, B4) of the circuit board 190.

Additionally, the circuit board 190 may comprise a fifth terminal (for example, B5) and a sixth terminal (not illustrated) for supplying power or a driving signal to the coil 120 from an external device (for example, a control part 830). The capacitor 195 may be electrically connected in parallel to two input terminals of the position sensor 170 or the first and second terminals (for example, B1, B2) of the circuit board 190.

The elastic member can elastically support the bobbin 110 relative to the housing 140. For example, the elastic member can comprise at least one of an upper elastic member 150 and a lower elastic member 160.

The upper elastic member 150 and the lower elastic member 160 may be implemented as leaf springs, but in other embodiments, they may be implemented as coil springs, suspension wires, or the like

For example, the upper elastic member 150 can be coupled with the upper part, upper surface, or upper end of the bobbin 110 and the upper part, upper surface, or upper end of the housing 140. The lower elastic member 160 can be coupled with the lower part, lower surface, or lower end of the bobbin 110 and the lower part, lower surface, or lower end of the housing 140.

At least one of the upper elastic member 150 or the lower elastic member 160 may comprise a plurality of elastic springs or elastic parts that are divided or separated into two or more pieces.

For example, the lower elastic member 160 may comprise a first lower spring 160a, a second lower spring 160b, and a third lower spring 160c that are spaced apart from each other.

In FIG. 29, the upper elastic member 150 is illustrated as comprising one upper spring that is not separated from one another; however, in other embodiments, the upper elastic member may comprise a plurality of upper springs.

The upper elastic member 150 may comprise a first inner frame 151 coupled with the upper part, upper surface, or upper end of the bobbin 110, a first outer frame 152 coupled with the upper part, upper surface, or upper end of the housing 140, and a first frame connection part 153 connecting the first inner frame 151 and the first outer frame 152. Here, the "inner frame" may be expressed as an "inner part," and the "outer frame" may be expressed as an "outer part."

For example, the upper elastic member 150 may comprise four first frame connection parts 153. In other embodiments, the upper elastic member 150 may comprise one or more first frame connection parts. For example, the first frame connection parts of the upper elastic member 150 may be positioned corresponding to the first to fourth corner parts 142A to 142D of the housing 140.

A first coupling part that is coupled with a first coupling part of a bobbin 110 may be provided on a first inner frame 151 of an upper elastic member 150, and the first coupling part of the first inner frame 151 may be a flat surface or a through-hole. A second coupling part 152A that is coupled with a first coupling part 143 of a housing 140 may be provided on a first outer frame 152. The second coupling part 152A may be a through-hole, but in other embodiments, it may be a flat surface or a groove.

The lower elastic member 160 may comprise a second inner frame 161 coupled with the lower part, lower surface, or lower end of the bobbin 110, a second outer frame 162 coupled with the lower part, lower surface, or lower end of the housing 140, and a second frame connection part 163 connecting the second inner frame 161 and the second outer frame 162.

Each of the first frame connection part 153 and the second frame connection part 163 may be formed to be bent or curved (or curved line) at least once to form a pattern of a certain shape. Through positional changes and microscopic deformations of the first and second frame connection parts 153, 163, the bobbin 110 may be elastically (or elastically) supported to rise and/or fall in the first direction.

A first coupling part coupled with a first coupling part of a bobbin 110 may be provided on a second inner frame 161 of the lower elastic member 160, and the first coupling part of the second inner frame 161 may be a flat surface or a through-hole. A second coupling part 162a coupled with a second coupling part 147 of a housing 140 may be provided on a second outer frame 162. The second coupling part 162a may be a through-hole, but in other embodiments, may be a flat surface or a groove.

Each of the first to third lower springs 160A to 160C may comprise a second inner frame 162, a second outer frame 162, and a second frame connection part 163.

Referring to FIG. 30, the first lower spring 160A may comprise a bonding part 51 for coupling one end part of the first coil part 120A by means of soldering or a conductive adhesive material. For example, the second inner frame 161 of the first lower spring 160A may comprise the first bonding part 51.

The second lower spring 160B may comprise a bonding part 52 for coupling one end part of the second coil part 120B by means of soldering or a conductive adhesive. For example, the second inner frame 161 of the second lower spring 160B may comprise the second bonding part 52.

The third lower spring 160C may comprise a third bonding part 53A for bonding the other end part of the first coil part 120A by means of soldering or a conductive adhesive material, and a fourth bonding part 53B for coupling the other end part of the second coil part 120B. For example, the second inner frame 161 of the third lower spring 160C may comprise third and fourth bonding parts 53A, 53B. For example, insertion grooves may be provided in the first to fourth bonding parts 51, 52, 53A, 53B for guiding the coil parts 120A, 120B.

For example, the first coil part 120A and the second coil part 120C may be connected in series with each other by the lower elastic member 160. For example, the first coil part 120A and the second coil part 120C may be connected in series with each other by the first to third coil parts 160A, 160C. Alternatively, for example, the third lower spring 160C may connect the first coil part 120A and the second coil part 120C in series.

The lower elastic member 160 can be coupled to the circuit board 190 by a conductive adhesive or solder. For example, the lower elastic member 160 can be electrically connected to the circuit board 190.

For example, one end (for example, the second outer frame 162) of the first lower spring 160A can be electrically connected to a terminal 91 of the circuit board 190 by a conductive adhesive or solder, and one end (for example, the second outer frame 162) of the second lower spring 160B can be electrically connected to a terminal 92 of the circuit board 190 by a conductive adhesive or solder.

The coil 120 can be electrically connected to terminals 91, 92 of a circuit board 190 through the first to third lower springs 160A to 160C. A driving signal can be provided to the coil 120 through the terminals 91, 92 of the circuit board 190 and the first to third lower springs 160A to 160C.

In another embodiment, the upper elastic member 150 may comprise first through third upper springs, and the description of the first through third lower springs 160A through 160C described in FIG. 30 may be applied or analogically applied to the first through third upper springs.

In another embodiment, one of the upper elastic member 150 and the lower elastic member 160 may comprise the first and second elastic members, and the other of the upper elastic member 150 and the lower elastic member 160 may comprise a third elastic member. Then, one end part of the first coil part 120A may be connected to the first elastic member by a conductive adhesive or solder, the other end part of the first coil part 120A may be connected to the third elastic member by the conductive adhesive or solder, and one end part of the second coil part 120B may be connected to the second elastic member by the conductive adhesive or solder, and the other end part of the second coil part 120B may be connected to the third elastic member by the conductive adhesive or solder. In addition, the first elastic member may be electrically connected to a terminal 91 of the circuit board 190 by a conductive adhesive or solder, and the second elastic member may be electrically connected to a terminal 92 of the circuit board 190 by a conductive adhesive or solder.

In another embodiment, the first coil part 120A and the second coil part 20B may be a single integral coil body that are directly connected to each other, and either the upper elastic member 150 or the lower elastic member 160 may comprise the first and second elastic members, one end part of the coil 120 may be connected to the first elastic member by a conductive adhesive or solder, and the other end part of the coil 120 may be connected to the second elastic member by a conductive adhesive or solder, and the first elastic member may be connected to a terminal 91 of a circuit board 190 by the conductive adhesive or solder, and the second elastic member may be connected to a terminal 92 of the circuit board 190 by the conductive adhesive or solder.

In order to absorb and cushion the vibration of the bobbin 110, the lens driving device 100 may further comprise a damper (not illustrated) disposed between the upper elastic member 150 and the housing 140 or between the upper elastic member 150 and the bobbin 110.

For example, the lens driving device 100 may comprise a damper (not illustrated) disposed between the first frame connection part 153 and the bobbin 110 or between the first frame connection part 153 and the housing 140. At this time, the damper (not illustrated) may contact, be coupled, or be attached to the first frame connection part 153 and the bobbin 110 or may be contacted, be coupled, or be attached to the first frame connection part 153 and the housing 140.

Additionally, for example, the lens driving device 100 may comprise a damper (not illustrated) disposed between the second frame connection part 163 of each of the first to third lower springs 160A to 160C and the bobbin 110 (or/and the housing 140).

Additionally, for example, the lens driving device 100 may comprise a damper (not illustrated) disposed between the inner surface of the housing 140 and the outer surface of the bobbin 110.

Referring to FIG. 33, the base 210 may be positioned under the bobbin 110 or the housing 140. For example, the base 210 may be positioned under the lower elastic member 160.

The base 210 may comprise an opening 301 corresponding to the opening 101 of the bobbin 110 and/or the opening 201 of the housing 140. The opening 301 may be a through-hole or hollow that penetrates the base 210 in the direction of the optical axis. The base 210 may have a shape that is identical or corresponding to the cover member 300 or the housing 140, for example, a rectangular shape.

For example, the base 210 can be coupled or fixed to the cover member 300.

The base 210 may have a step 211 at the lower end of the side surface to which adhesive may be applied when the cover member 300 is adhered and fixed. At this time, the step 211 may guide the cover member 300 coupled to the upper side, and may face the lower end of the side plate 302 of the cover member 300. An adhesive member or/and a sealing member may be placed or applied between the bottom of the side plate 302 of the cover member 300 and the step 211 of the base 210.

The base 210 may comprise a boss 216 protruding from the upper surface. The boss 216 may also be expressed as a "column part" instead. The boss 216 may be positioned at a corner of the base 210. For example, the boss 216 may correspond to, face, or overlap with a groove 148 of the housing 140 in the optical axis direction. For example, the boss 216 may have a polygonal column shape protruding from the upper surface of the base 210 so as to be perpendicular to the upper surface of the base 210. For example, when viewed in the first direction or from above, the boss 216 may have a triangular, square, or circular shape.

The boss 216 can be inserted into the groove 148 of the housing 140 and can be fastened or combined with the groove 148 of the housing 140 by an adhesive material (not illustrated) such as epoxy or silicone.

In order to prevent the lower surface or lower end of the bobbin 210 from directly colliding with the upper surface of the base 210 when an external impact occurs, the base 210 may comprise a stopper (not illustrated) protruding from the upper surface, and the stopper of the base 210 may be disposed corresponding to the boss 216 of the base 210, but is not limited thereto.

In order to avoid spatial interference between the bobbin 110 and the lower elastic member 160, the stopper of the base 210 may be positioned higher than the second frame connection part 163 of the lower springs (160a, 160b) coupled to the base 210.

The base 210 may comprise a seating groove 215 for disposing or seating the lower end (or second part 190B) of the circuit board 190 on a side surface or outer surface corresponding to the first side part (for example, 141A) of the housing 140 where the circuit board 190 is disposed.

For example, terminals 95 of the circuit board 190 may be disposed on the outer surface of the base 210 corresponding to the first side part 141A of the housing 140. For example, terminals 95 of the circuit board 190 may be positioned within the seating groove 215 of the base 210.

The cover member 300 accommodates the housing 140 and the AF driving part within an accommodation space formed together with the base 210.

The cover member 300 may be in the form of a box having an open lower part and comprising an upper plate 301 and a side plate 302. The lower end of the side plate 302 of the cover member 300 may be coupled to the base 210. The shape of the upper plate 301 of the cover member 300 may be a polygon, for example, a square or an octagon, and the upper plate 301 may comprise an opening (303) for exposing a lens (not illustrated) to external light.

The material of the cover member 300 may be a non-magnetic material such as SUS or plastic to prevent the magnet 130 from sticking to the cover member, but in other embodiments, the cover member 300 may be formed of a magnetic material and may function as a yoke.

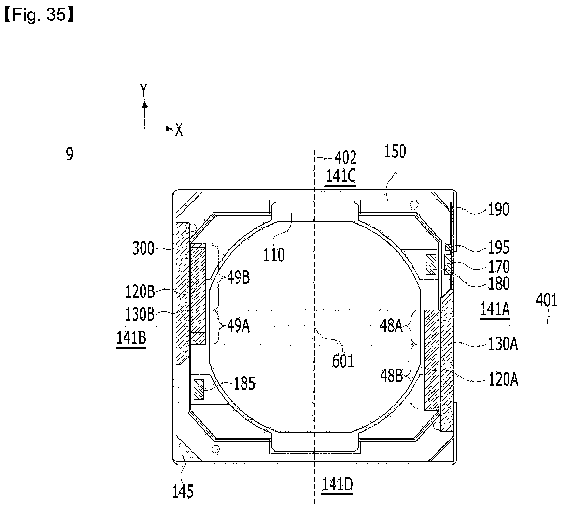

FIG. 35 is a plan view of a coil 120, a magnet 130, a position sensor 170, a sensing magnet 180, a balancing magnet 185, and a capacitor 195.

Referring to FIG. 35, at the initial position of the bobbin 110, the position sensor 170 may overlap with the sensing magnet 180 in a direction perpendicular to the optical axis, passing through the optical axis and from the first side part 141A to the second side part 141B of the housing 140, or in a second direction (X-axis direction), or in a direction parallel to the virtual plane (or straight line) 401.

The first coil part 120A and the second coil part 20B may be disposed to be offset in opposite directions with respect to a virtual plane (or virtual straight line) 401. For example, the virtual plane 401 (or straight line) may be a plane (or straight line) that is perpendicular to the optical axis OA, passes through the optical axis, and is parallel to the direction from the first side part 141A to the second side part 141B of the housing 140.

Alternatively, for example, a virtual surface 401 or a virtual straight line may pass through the center 601 of the bobbin.

For example, the hollow 12A of the first coil part 120A and the hollow 12A of the second coil part 20B may be disposed in opposite directions with respect to the virtual surface (or virtual straight line) 401.

The first coil part 120A may be disposed adjacent to one 142D of two corners 142B, 142D of the housing 140 that are positioned opposite to each other with respect to the optical axis, and the second coil part 120B may be disposed adjacent to the other 142B of the two corners 142B, 142D of the housing 140 that are positioned opposite to each other with respect to the optical axis.

At least a part of the first magnet part 130A may overlap at least a part of the second magnet part 120B in a direction perpendicular to the optical axis, passing through the optical axis and from the first side part 141A to the second side part 141B of the housing 140, or in a direction parallel to a virtual plane (or straight line) 401.

In another embodiment, the first magnet part 130A may not overlap the second magnet part 130B in a direction perpendicular to the optical axis, passing through the optical axis and from the first side part 141A to the second side part 141B of the housing 140, or in a direction parallel to a virtual plane (or straight line) 401.

At least a part of the first coil part 120A may overlap at least a part of the second coil part 120B in a direction perpendicular to the optical axis, passing through the optical axis and from the first side part 141A to the second side part 141B of the housing 140, or in a direction parallel to a virtual plane (or straight line) 401.

At least a part of the position sensor 170 may overlap at least a part of the second coil part 120B in a direction perpendicular to the optical axis, passing through the optical axis and from the first side part 141A to the second side part 141B of the housing 140 or in a direction parallel to the virtual plane (or straight line) 401. In another embodiment, the position sensor 170 may not overlap the second coil part 120B in a direction perpendicular to the optical axis, passing through the optical axis and from the first side part 141A to the second side part 141B of the housing 140 or in a direction parallel to the virtual plane (or straight line) 401.

At least a part of the position sensor 170 may overlap at least a part of the second magnet part 130B in a direction perpendicular to the optical axis, passing through the optical axis and from the first side part 141A to the second side part 141B of the housing 140, or in a direction parallel to a virtual plane (or straight line) 401.

At least a part of the sensing magnet 180 may overlap at least a part of the second magnet part 120B in a direction perpendicular to the optical axis, passing through the optical axis and from the first side part 141A to the second side part 141B of the housing 140, or in a direction parallel to a virtual plane (or straight line) 401.

Additionally, at least a part of the sensing magnet 180 may overlap at least a part of the second coil part 120B in a direction perpendicular to the optical axis, passing through the optical axis and from the first side part 141A to the second side part 141B of the housing 140 or in a direction parallel to the virtual plane (or straight line) 401. In another embodiment, the sensing magnet 180 may not overlap with the second coil part 120B in a direction perpendicular to the optical axis, passing through the optical axis and from the first side part 141A to the second side part 141B of the housing 140 or in a direction parallel to the virtual plane (or straight line) 401.

The first coil part 120A may be asymmetrical left and right with respect to a virtual plane (or a virtual straight line) 401. The second coil part 120B may be asymmetrical left and right with respect to the virtual plane (or the virtual straight line 401. The first magnet part 130A may be asymmetrical left and right with respect to the virtual plane (or the virtual straight line 401). The second magnet part 130B may be asymmetrical left and right with respect to the virtual plane (or the virtual straight line 401). In another embodiment, each of the first coil part 120A and the second coil part 120B may be asymmetrical left and right with respect to the virtual plane (or the virtual straight line 401).

The first magnet part 130A and the second magnet part 130B may be disposed asymmetrically left and right with respect to the virtual straight line (or virtual straight line) 402. The first coil part 120A and the second coil part 120B may be disposed asymmetrically left and right with respect to the virtual straight line (or virtual straight line) 402. In another embodiment, the first magnet part 130A and the second magnet part 130B may be disposed symmetrically left and right with respect to the virtual straight line (or virtual straight line) 402. In another embodiment, the first coil part 120A and the second coil part 120B may be disposed symmetrically left and right with respect to the virtual straight line (or virtual straight line) 402.

For example, 401 can be perpendicular to the optical axis, passing through the optical axis and parallel to the second direction.

For example, the virtual surface (or virtual straight line) 402 can be perpendicular to the optical axis, pass through the optical axis, and be parallel to a direction from the third side part 141C to the fourth side part 141D of the housing 140. For example, 402 can be perpendicular to the optical axis, pass through the optical axis, and be parallel to the third direction. For example, 402 can pass through the center 601 of the hollow of the bobbin 110.

The first coil part 120A may comprise a first part 48A (or first region) that overlaps the second coil part 120B in a direction perpendicular to the optical axis, passing through the optical axis and from the first side part 141A to the second side part 141B of the housing 140 or in a direction parallel to a virtual plane (or straight line) 401, and a second part 48B (or second region) that does not overlap the second coil part 120B.

The first length of the first part 48A of the first coil part 120A may be different from the second length of the second part 48B of the first coil part 120A. For example, the first length may be smaller than the second length.

For example, the first length may be the length of the first part 48A in the third direction (Y-axis direction), in the direction from the third side part of the housing 140 to the fourth side part, in the direction perpendicular to the direction from the first side part 141A to the second side part 141B, or in the direction parallel to the first side part 141A of the housing 140 or in the direction parallel to the virtual plane 402.

For example, the second length may be the length of the second part 48B in the third direction (Y-axis direction), in the direction from the third side part 141C of the housing 140 to the fourth side part 141D, in the direction perpendicular to the direction from the first side part 141A to the second side part 141B, or in the direction parallel to the first side part 141A of the housing 140 or in the direction parallel to the virtual plane 402.

The second length may be greater than three times the first length and less than five times the first length. If the second length is less than three times the first length, the overlapping area between the first magnet part 130A and the second magnet part 130B increases, so that the disposition space of the position sensor 170 and the capacitor 195 may not be sufficient within the design size range of the preset lens driving device.

In addition, when the second length is more than five times the first length, the overlapping area between the first magnet part 130A and the second magnet part 130B may decrease, which may cause the size of each of the magnet parts 130A, 130B to decrease and the driving force to decrease.

In another embodiment, the second length may be greater than 1.5 times the first length and less than 5 times the first length. In another embodiment, the second length may be greater than 1 time the first length and less than 7 times the first length. In another embodiment, the first length and the second length may be equal.

The second coil part 120B may comprise a first part 49A (or first region) that overlaps the first coil part 120A in a direction perpendicular to the optical axis and directed from the first side part 141A to the second side part 141B of the housing 140 or in a second direction (X-axis direction), and a second part 49B (or second region) that does not overlap the first coil part 120A.

The description of the first and second parts 48A, 48B of the first coil part 120A can be applied or analogically applied to the first and second parts 49A, 49B of the second coil part 120B.

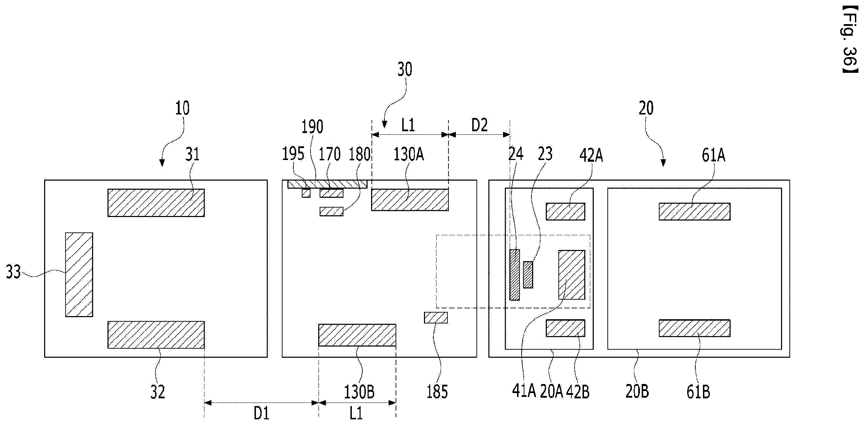

FIG. 36 is a conceptual diagram illustrating a triple camera device according to a second embodiment of the present disclosure.

The camera device of FIG. 36 may comprise three actuators 10, 20, 30. For example, the camera device of FIG. 36 may comprise a first actuator 10, a second actuator 20, and a third actuator 30 disposed between the first actuator 10 and the second actuator 20. In this case, the third actuator 30 may comprise a lens driving device 100 according to the embodiment.

Each of the three actuators 10, 20, 30 may comprise a driving magnet for driving AF or OIS. In a triple camera device, a design is required to minimize magnetic interference between the driving magnets comprised in the actuators 10, 20, 30 for accurate AF driving and OIS driving.

For example, the first actuator 10 comprises three driving magnets 31 to 33, and no driving magnet is disposed in the area adjacent to the third actuator 30.

The second actuator 20 may comprise an OIS actuator 20A comprising OIS magnet parts 41A, 42A, 42B for performing an OIS operation and a zoom actuator 20B comprising driving magnet parts 61A, 61B for performing a zoom function. The OIS actuator 20A may further comprise a separate magnet part 23 and a yoke 24 for fixing the OIS moving part.

The driving magnets 31 to 33 of the first actuator 10 and the magnets 41A, 42A, 42B of the second actuator 20 can be disposed as illustrated in Fig. 36.

In order to dispose the magnets 31 to 33, 42A, 41B, 42B disposed in the first actuator 10 and the second actuator 20 so that magnetic interference can be minimized, in the embodiment, the magnets 130A, 130B, 180, 185 can be disposed as illustrated in FIG. 36. In other words, in the lens driving device 100, the driving magnet part is not disposed on the third and fourth side parts 141C, 141D of the housing 140, and the position sensor 170 and the first magnet part 130A are disposed on the first side part 141A of the housing 140, thereby reducing magnetic interference between the sensing magnet 180 and the balancing magnet 185 of the third actuator 30 and the magnets 41A, 42A, 42B of the second actuator 20. As a result, the embodiment can prevent malfunction of the AF drive due to magnetic interference , and improve the reliability of the AF drive.

The magnetic interference between the magnets of adjacent actuators can be greatly affected by the separation distance between the magnets of adjacent actuators.

The distance D1 between the driving magnet 32 of the actuator 10 and the magnet 130B of the actuator 30 may be 70 percent or more and 200 percent or less of the length L1 of the magnet 130B. When D1 is less than 70 percent of L1, the influence of the magnetic interference between the driving magnet 32 and the magnet 130B is large, so that the reliability of the AF operation and the OIS operation of the actuator 10 may deteriorate, and the reliability of the AF operation of the actuator 30 may deteriorate. In addition, when D1 exceeds 200 percent of L1, the influence of the magnetic interference is minimal, but the size of the camera module may increase too much.

In other embodiments, D1 may be greater than or equal to 80 percent and less than or equal to 150 percent of L1 to prevent the size from increasing too much while reducing the influence of magnetic interference. Or, in other embodiments, D1 may be greater than or equal to 90 percent and less than or equal to 120 percent of L1. Alternatively, for example, in other embodiments, D1 may be greater than or equal to 70 percent and less than or equal to 100 percent of the length L1 of the magnet 130B.

The distance D2 between the magnet 130A of the actuator 30 and the yoke 24 (or magnet 23) of the actuator 20 may be 30 percent or more and 100 percent or less of the length L1 of the magnet 130A. When D2 is less than 30 percent of L1, the influence of the magnetic interference between the magnet 130A and the yoke 24 (or magnet 23) is large, so that the reliability of the OIS operation of the actuator 20 may deteriorate and the reliability of the AF operation of the actuator 30 may deteriorate. In addition, when D3 exceeds 100 percent of L1, the influence of the magnetic interference is minimal, but the size of the camera module may increase too much.

In another embodiment, D2 may be greater than or equal to 50 percent and less than or equal to 80 percent of L1 to prevent the size from increasing too much while reducing the influence of magnetic interference. Alternatively, in another embodiment, D2 may be greater than or equal to 40 percent and less than or equal to 60 percent of L1. Alternatively, for example, in another embodiment, D2 may be greater than or equal to 30 percent and less than or equal to 50 percent of the length L1 of the magnet 130A.

In addition, if the position sensor 170 is disposed on the side part of the second actuator 30 adjacent to the magnet 23 of the third actuator 30 (for example, the fourth side part 141D of the housing 140), the space between the circuit board 190 and the second actuator 20 may be too narrow, making it difficult to perform the soldering process on the terminal 95 of the circuit board 190. On the other hand, in the embodiment, since the circuit board 190 is disposed on the first side part 141A of the housing 140, the soldering process on the terminal of the circuit board 190 may be easy in FIG. 36.

Compared to a comparative example comprising a coil wound on the outer circumferential surface of a bobbin 110 based on an optical axis, disposing two coil parts 120A, 120B on two side parts of a bobbin 110 for AF driving is suitable for the design of a large-diameter lens driving device because it takes up less space. Accordingly, since the embodiment implements AF driving using two glasses coil parts, a large-diameter lens driving device can be implemented.

Meanwhile, the lens driving device according to the-described embodiment can be used in various fields, for example, a camera module or an optical device.

For example, the lens driving device 100 according to the embodiment may be comprised in an optical instrument that forms an image of an object in space by using the characteristics of light such as reflection, refraction, absorption, interference, and diffraction, and aims to enhance the visual acuity of the eye, or to record and reproduce an image by a lens, or to optically measure, propagate or transmit an image, or the like. For example, the optical device according to the embodiment may comprise a smartphone and a portable terminal equipped with a camera.

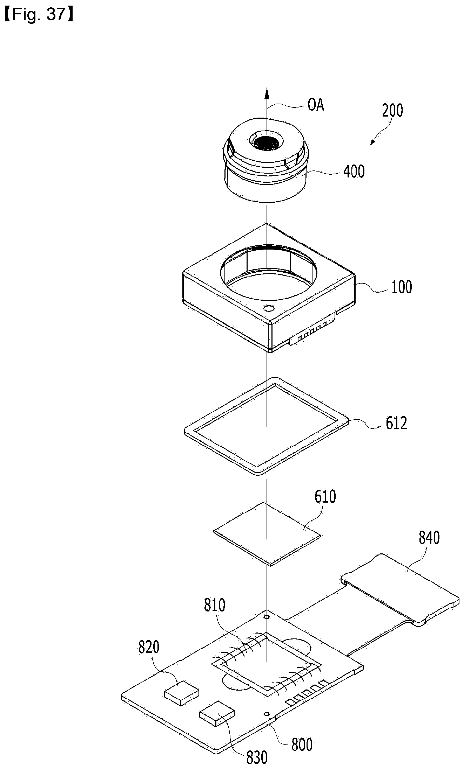

FIG. 37 is an exploded perspective view illustrating a camera device 200 according to a second embodiment of the present disclosure.

Referring to FIG. 37, the camera device 200 may comprise a lens or lens barrel 400, a lens driving device 100, an adhesive member 612, a filter 610, a first holder 600, a second holder 800, an image sensor 810, a motion sensor 820, a control part 830, and a connector 840.

The lens module 400 may be mounted or coupled to the bobbin 110 of the lens driving device 100. The lens module 400 may comprise at least one of a lens or a lens barrel 400.

The first holder 600 may be placed under the base 210 of the lens driving device 100. The filter 610 is mounted on the first holder 600, and the first holder 600 may have a boss 500 on which the filter 610 is seated.

The adhesive member 612 can couple or attach the base 210 of the lens driving device 100 to the first holder 600. In addition to the adhesive function described above, the adhesive member 612 can also play a role in preventing foreign substances from entering the inside of the lens driving device 100.

For example, the adhesive material 612 may be an epoxy, a thermosetting adhesive, an ultraviolet-curable adhesive, or the like.

The filter 610 may block light of a specific frequency band from passing through the lens barrel 400 from entering the image sensor 810. The filter 610 may be an infrared blocking filter, but is not limited thereto. In this case, the filter 610 may be disposed parallel to the xy plane.

An opening may be formed in the part of the first holder 600 where the filter 610 is mounted so that light passing through the filter 610 can enter the image sensor 810.

The second holder 800 is placed below the first holder 600, and an image sensor 810 can be mounted on the second holder 600. The image sensor 810 is a part where light passing through the filter 610 is incident and an image comprised in the light is formed.

The second holder 800 may be equipped with various circuits, components, control parts, or the like to convert an image formed on the image sensor 810 into an electrical signal and transmit it to an external device.

The second holder 800 can be implemented as a circuit board on which an image sensor can be mounted, a circuit pattern can be formed, and various elements can be combined.

The image sensor 810 can receive an image comprised in light incident through the lens driving device 100 and convert the received image into an electrical signal.

The filter 610 and the image sensor 810 can be spaced apart from each other so as to face each other in the first direction.

The motion sensor 820 is mounted in the second holder 800 and can be electrically connected to the control part 830 through a circuit pattern provided in the second holder 800.

The motion sensor 820 outputs rotational angular velocity information due to the movement of the camera device 200. The motion sensor 820 can be implemented as a two-axis or three-axis gyro sensor or an angular velocity sensor.

The control part 830 is mounted on the second holder 800. The second holder 800 can be electrically connected to the lens driving device 100. For example, the second holder 800 can be electrically connected to the circuit board 190 of the lens driving device 100.

For example, a driving signal may be provided to the position sensor 170 through the second holder 800, and an output signal of the position sensor 170 may be transmitted to the second holder 800. For example, the output signal of the position sensor 170 may be received by the control part 830.

The connector 840 is electrically connected to the second holder 800 and may have a port for electrically connecting to an external device.

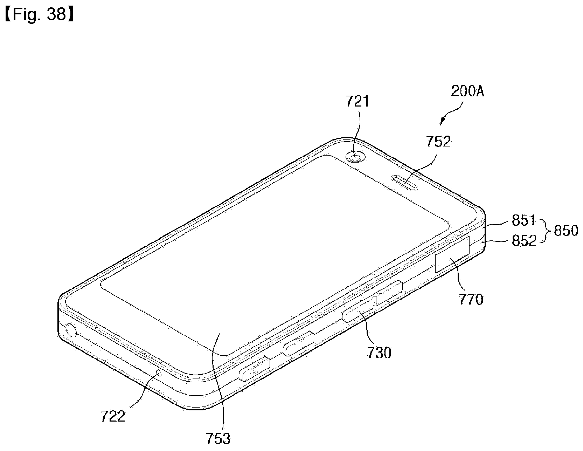

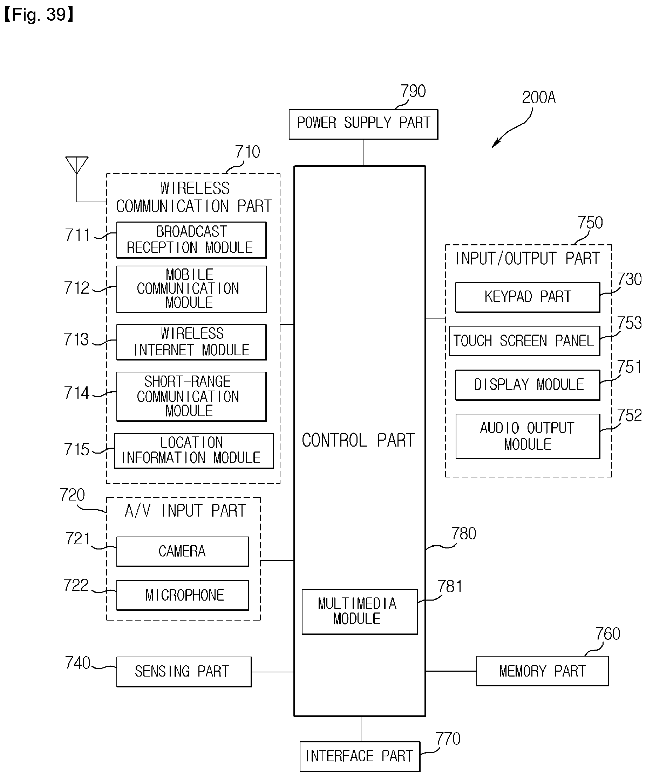

FIG. 38 is a perspective view illustrating a portable terminal 200A according to a second embodiment of the present disclosure, and FIG. 39 is a configuration diagram illustrating the portable terminal 200A illustrated in FIG. 38.

Referring to FIGS. 38 and 39, a portable terminal (200A, hereinafter referred to as "terminal" ) may comprise a body 850, a wireless communication part 710, an A/V input part 720, a sensing part 740, an input/output part 750, a memory part 760, an interface part 770, a control part 780, and a power supply part 790.

The body 850 illustrated in Fig. 38 is in the form of a bar, but is not limited thereto, and may have various structures such as a slide type, folder type, swing type, or swivel type in which two or more sub-bodies are coupled to enable relative movement.

The body 850 may comprise a case (casing, housing, cover, or the like) forming the outer appearance. For example, the body 850 may be divided into a front case 851 and a rear case 852. Various electronic components of the terminal may be built into the space formed between the front case 851 and the rear case 852.

The wireless communication part 710 may be configured to comprise one or more modules that enable wireless communication between the terminal 200A and the wireless communication system or between the terminal 200A and the network in which the terminal 200A is located. For example, the wireless communication part 710 may be configured to comprise a broadcast reception module 711, a mobile communication module 712, a wireless Internet module 713, a short-range communication module 714, and a location information module 715.

The A/V (Audio/Video) input part 720 is for inputting audio signals or video signals and may comprise a camera 721 and a microphone 722, or the like The camera 721 may comprise a camera device 200 according to an embodiment.

The sensing part 740 can detect the current state of the terminal 200A, such as the open/close state of the terminal 200A, the position of the terminal 200A, whether the user is in contact, the orientation of the terminal 200A, acceleration/deceleration of the terminal 200A, and generate a sensing signal to control the operation of the terminal 200A. For example, if the terminal 200A is in the form of a slide phone, it can sense whether the slide phone is open or closed. In addition, it is in charge of sensing functions related to whether power is supplied by the power supply part 790, whether the interface part 770 is connected to an external device, and the like.

The input/output part 750 is for generating input or output related to vision, hearing, or touch. The input/output part 750 can generate input data for controlling the operation of the terminal 200A and can also display information processed in the terminal 200A.

The input/output part 750 may comprise a key pad part 730, a display module 751, an audio output module 752, and a touch screen panel 753. The key pad part 730 may generate input data by key pad input.

The display module 751 may comprise a plurality of pixels whose colors change according to an electrical signal. For example, the display module 751 may comprise at least one of a liquid crystal display, a thin film transistor-liquid crystal display, an organic light-emitting diode, a flexible display, and a 3D display.

The audio output module 752 can output audio data received from the wireless communication part 710 in a call signal reception mode, a call mode, a recording mode, a voice recognition mode, a broadcast reception mode, or the like, or output audio data stored in the memory part 760.

The touch screen panel 753 can convert a change in electrostatic capacitance resulting from a user's touch on a specific area of the touch screen into an electrical input signal.

The memory part 760 may store programs for processing and controlling the control part 780, and may temporarily store input/output data (for example, phone book, messages, audio, still images, photographs, videos, or the like). For example, the memory part 760 may store images captured by the camera 721, such as photographs or videos.

The interface part 770 serves as a passage connecting to an external device connected to the terminal 200A. The interface part 770 receives data from an external device, supplies power, and transmits it to each component inside the terminal 200A, or allows data inside the terminal 200A to be transmitted to an external device. For example, the interface part 770 may comprise a wired/wireless headset port, an external charger port, a wired/wireless data port, a memory card port, a port for connecting a device equipped with an identification module, an audio I/O (Input/Output) port, a video I/O (Input/Output) port, and an earphone port.

The control part (controller, 780) can control the overall operation of the terminal 200A. For example, the control part 780 can perform related control and processing for voice calls, data communications, video calls, or the like.

The control part 780 may be equipped with a multimedia module 781 for multimedia playback. The multimedia module 781 may be implemented within the control part 180 or may be implemented separately from the control part 780.

The control part 780 can perform pattern recognition processing to recognize handwriting input or drawing input performed on the touch screen as characters and images, respectively.

The power supply part 790 can supply power required for the operation of each component by receiving external power or internal power under the control of the control part 780.

Although the first embodiment and the second embodiment have been described separately above, some components of the first embodiment and some components of the second embodiment may be used interchangeably. In other words, some components of the first embodiment may be replaced with corresponding components of the second embodiment. In addition, some components of the second embodiment may be replaced with corresponding components of the first embodiment. In addition, the third embodiment of the present disclosure may comprise some components of the first embodiment and some components of the second embodiment together.

Although the embodiments of the present disclosure have been described with reference to the attached drawings, those skilled in the art will understand that the present disclosure can be implemented in other specific forms without changing the technical idea or essential features thereof. Therefore, it should be understood that the embodiments described above are exemplary in all respects and not restrictive.

## Claims

1. A lens driving device comprising;
a housing;
a substrate disposed on the housing;
a holder disposed in the housing;
a magnet disposed on the holder;
a coil configured to interact with the magnet; and
an elastic member connecting the housing and the holder,
wherein the coil comprises a first coil disposed on the substrate and a second coil disposed on an opposite side of the first coil based on an optical axis, and
wherein the elastic member electrically connects the second coil and the substrate.

2. The lens driving device of claim 1, wherein the elastic member comprises an upper elastic member disposed on an upper surface of the holder,
wherein the upper elastic member comprises first and second upper elastic members spaced apart from each other,
wherein the first upper elastic member is coupled to one end part of the second coil, and
wherein the second upper elastic member is coupled to the other end part of the second coil.

3. The lens driving device of claim 2, wherein the elastic member comprises a lower elastic member disposed on a lower surface of the holder, and
wherein the lower elastic member is formed integrally.

4. The lens driving device of claim 1, wherein the magnet comprises a first magnet configured to interact with the first coil and a second magnet configured to interact with the second coil, and
wherein the first coil and the second coil are configured to move the holder in an optical axis direction.

5. The lens driving device of claim 1, wherein the second coil is spaced apart from the substrate.

6. The lens driving device of claim 2, wherein the upper elastic member comprises an inner part coupled to the upper surface of the holder, an outer part coupled to an upper surface of the housing, a connection part connecting the inner part and the outer part, and a terminal part extending from the outer part,
wherein the terminal part is coupled with a terminal of the substrate, and
wherein the housing comprises a groove formed on the upper surface of the housing at a position corresponding to the terminal of the substrate.

7. The lens driving device of claim 1, wherein the magnet comprises a first magnet configured to interact with the first coil,
wherein the first magnet comprises a first surface facing the first coil,
wherein, in a direction perpendicular to the first surface of the first magnet, the first coil comprises a first part that does not overlap with the first magnet, and
wherein at least a part of the first part of the first coil is covered by the housing when viewed from an inside of the housing.

8. The lens driving device of claim 1, comprising a driver IC disposed on the substrate,
wherein the driver IC comprises a sensing part configured to detect the magnet,
wherein the magnet comprises a first magnet part having a N pole and a S pole, a second magnet part disposed on the first magnet part and having a N pole and a S pole, and a neutral part disposed between the first magnet part and the second magnet part, and
wherein the driver IC is disposed in the first coil and is overlapped with the neutral part of the magnet in a direction perpendicular to an optical axis.

9. The lens driving device of claim 1, wherein one end part of the first coil and the other end part of the first coil are coupled to the substrate.

10. The lens driving device of claim 1, wherein one end part of the first coil and the other end part of the first coil are both directly coupled to the substrate.
